# EUROPEAN PATENT SPECIFICATION

(11) **EP 4 321 602 B1**
(45) Date of publication and mention of the grant of the patent: **11.09.2024**
(21) Application number: 23188947.8
(22) Date of filing: 01.08.2023
(51) Int. Cl.: C10M 145/14, C08F 2/38, C08L 33/10, C08F 220/18, C08F 290/04

(54) **SULFUR FREE POLY ALKYL(METH)ACRYLATE COPOLYMERS AS VISCOSITY INDEX IMPROVERS IN LUBRICANTS**
SCHWEFELFREIE POLYALKYL(METH)ACRYLAT-COPOLYMERE ALS VISKOSITÄTSINDEXVERBESSERER IN SCHMIERMITTELN
COPOLYMÈRES DE POLY(MÉTH)ACRYLATE D'ALKYLE SANS SOUFRE UTILISÉS COMME AMÉLIORANTS D'INDICE DE VISCOSITÉ DANS DES LUBRIFIANTS

(30) Priority: 10.08.2022 EP 22189638
(43) Date of publication of application: 14.02.2024
(73) Proprietor: Evonik Operations GmbH, 45128 Essen (DE)
(72) Inventor: Yuki, Tsuyoshi, Otsu City 520-0005 (JP); Arai, Yasuo, Takatsu-ku, Kawasaki City, Kanagawa 213-0032 (JP); Kishida, Nobuhiro, Seya-ku, Yokohama-shi, Kanagawa 246-0035 (JP); Suzuki, Kengo, Tokyo 154-0011 (JP); Matsuda, Tomohiro, Tokyo 130-0023 (JP); Hilf, Stefan, 64673 Zwingenberg (DE)
(74) Representative: Evonik Patent Association

(56) References cited:
- WO-A1-2007/003238
- US-A1- 2019 177 640
- US-A1- 2021 179 965
- US-A1- 2022 195 325

## Description

### TECHNICAL FIELD OF THE INVENTION

The present invention relates to sulfur-free poly alkyl(meth)acrylate copolymers obtainable by radical polymerization of monomer compositions comprising at least a polybutadiene-based macromonomer and to a composition comprising the same. The invention also relates to the use of the poly alkyl(meth)acrylate copolymers for improving viscosity index and preventing copper corrosion of metals consisting of or containing copper, as well as to a method for preventing copper corrosion of metals consisting of or containing copper.

### BACKGROUND OF THE INVENTION

Poly alkyl(meth)acrylate copolymers are widely used as viscosity index improver (VII) or pour-point depressant (PPD) with excellent viscosity index (VI) improving property, shear stabilizing property and solubility in base oils. Accordingly, lubricants, dielectric fluids, coolants, fuels or the like containing poly alkyl(meth)acrylate copolymers have been known to show excellent viscosity index and shear stability and thus save fuel. They also have a long service life.

Viscosity index improver (VII) is an additive used to improve the temperature-dependent property of fluids comprising at least a base oil or a hydrocarbon, such as lubricants, dielectric fluids, coolants, fuels or the like. The viscosity index (VI) is often calculated from the kinematic viscosity at 40 °C (KV40) and the kinematic viscosity at 100 °C (KV100). The higher the VI is, the lower the temperature-dependency of the viscosity of the fluids, i.e. the range of the viscosity change depending on the temperature is narrow when the VI is high.

Improvement of VI leads to reduction of fuel consumption and CO₂ emissions in vehicles, e.g. automotives, and thus many poly alkyl(meth)acrylates having an excellent VI improving property were developed for this purpose.

In addition, the shear-resistance of the fluids that are used as lubricants, dielectric fluids, coolants, fuels, etc. is very important: on one hand, the life-times of the fluids can be extended when the shear-resistance thereof is high (meaning that the viscosity loss is low), and on the other hand, improvement of the shear-resistance reduces the shear-losses that may cause a failure of the metal parts. Further, the degradation of certain components of the fluids due to shear-loss may lead to the formation of insoluble components or fragments in said fluids, which can, for example, block filters or other mechanical components and may lead to failure of the mechanical or electrical devices, for example transmission, in which such fluids are used.

In order to achieve a high shear stability of fluids such as DL fluids, polymers obtained by radical polymerization in the presence of CTA such as dodecyl mercaptan are often used since use of dodecyl mercaptan leads to a lower molecular weight of the polymers. But the sulfur content in such CTA remains in the polymers and causes corrosion of metals, especially metals consisting of or containing copper.

EP3498808A1 discloses a viscosity index improver with improved shear stability and solubility after shear. EP3498808A1 does not describe anything whatsoever about corrosion inhibition or reduction by said polymer.

On the other hand, there is always a growing demand for improved VII that can be used in fluids, especially driveline fluids like lubricants, dielectric fluids, coolants or fuels which are applied directly to or used in metal parts of mechanical or electric devices such as transmissions, engines, batteries and powertrains of vehicles.

Especially, due to the growing market of electric vehicles and hybrid vehicles, VIIs which not only improve the VI and shear-resistance of the abovementioned fluids, preferably e-DL fluids, but also do not cause corrosion to metal parts, for example metal parts consisting of or comprising copper that come into direct contact with said fluids are desired.

Therefore, the aim of the present invention is to provide novel poly alkyl(meth)acrylate copolymers that can be used as viscosity index improver having not only an excellent solubility in various base oils, excellent viscosity index improving property and shear resistance improving property, but also preventing or reducing copper corrosion of the metal parts in mechanical or electric devices in vehicles such as automotives, trains or aircraft.

### SUMMARY OF THE INVENTION

The invention is defined in the appended claims. It was surprisingly found that poly alkyl(meth)acrylate copolymers, which are synthesized with sulfur-free chain transfer agents (CTA), have very good properties as viscosity index improver (VII) and have a high shear stability. Such copolymers solve the above technical problem as they prevent or reduce copper corrosion of metal parts consisting of or containing copper, while maintaining the excellent viscosity index improving property and shear stability when used as an additive to said fluids.

Accordingly, in the first aspect, the present invention relates to sulfur-free poly alkyl(meth)acrylate copolymers having a sulfur content of less than 50 ppm as defined in claim 1.

In the second aspect, the present invention relates to a composition comprising:
(A) a base oil; and
(B) the sulfur-free poly alkyl(meth)acrylate of the present invention.

In the third aspect, the present invention relates to use of the sulfur-free poly alkyl(meth)acrylate copolymers for improving viscosity index and preventing copper corrosion of metals consisting of or containing copper.

In the fourth aspect, the present invention relates to a method for preventing copper corrosion of metals consisting of or containing copper.

### DETAILED DESCRIPTION OF THE INVENTION

### Sulfur-free copolymers according to the invention

The present invention relates to sulfur-free poly alkyl(meth)acrylate copolymers having a sulfur content of less than 50 ppm and a weight average molecular weight (M_{w}) of 10,000 to 200,000 g/mol, and obtainable by radical polymerization of a monomer composition comprising:
(a) 10 to 50 wt.-% of one or more polybutadiene-based macromonomer(s) having a number average molecular weight (Mₙ) of 500 to 10,000 g/mol;
(b) 10 to 90 wt.-% of one or more monomer selected from a group consisting of linear or branched C₁-C₆ alkyl(meth)acrylates, styrene and substituted styrene having an alkyl substituent in the side chain and having from 8 to 17 carbon atoms; and
(c) 0 to 30 wt.-% of one or more monomer selected from a group consisting of linear or branched C₇-C₃₀ alkyl(meth)acrylates;

respectively based on the total weight of the monomer composition, and
wherein the radical polymerization of the monomer composition is carried out in the presence of a sulfur-free chain transfer agent selected from:
   (i) terpenoids;
   (ii) oligomers of methacrylate or methacrylic acid having a weight average molecular weight (M_{w}) of less than 15,000 g/mol;
   (iii) styrene oligomers having a weight average molecular weight (M_{w}) of less than 1,000 g/mol;
   (iv) Co(ll) complexes;
   (v) addition-fragmentation chain transfer agents represented by a chemical formula (I), 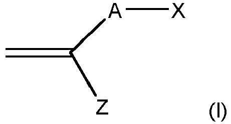
   wherein A is -O- or -CH₂-, X is C₁-C₄ alkyl, peroxy C₁-C₆ alkyl, peroxy C₆-C₁₀ aralkyl, -CH₂Ph, or -COOR¹ with R¹ being C₁-C₄ alkyl, and Z is Ph, -CN, -OR¹ with R¹ being C₁-C₄ alkyl, COOR¹ with R¹ being C₁-C₄ alkyl, or -CONH₂;
   (vi) quinones;
   (vii) ethylenically unsaturated hydrocarbons having 4-14 carbon atoms;
   (viii) isopropanol;
or a mixture thereof.

The poly alkyl(meth)acrylates of the present invention ((hereinafter also simply referred to as "polymer" or "copolymer") may also be referred to as polybutadiene-containing PAMA polymer, polybutadiene-containing PAMA, or poly alkyl(meth)acrylates based on polybutadiene-based macromonomers in the following.

A polybutadiene-containing PAMA polymer in the context of this invention comprises a first polymer, which is also referred to as backbone or main chain, and a multitude of further polymers which are referred to as side chains and are bonded covalently to the backbone. In the present case, the backbone of the polymer is formed by the interlinked unsaturated groups of the mentioned (meth)acrylic acid esters. The alkyl groups and the hydrogenated polybutadiene chains of the (meth)acrylic esters form the side chains of the polymer. The reaction product of one ester of (meth)acrylic acid and one hydroxylated hydrogenated polybutadiene or the reaction product of one (meth)acrylic acid and one hydroxylated hydrogenated polybutadiene corresponds to monomer (a) and is also referred in the present invention as macromonomer or polybutadiene-based macromonomer.

The term "polybutadiene-based macromonomer(s)" used herein refer to esters of (meth)acrylic acid, which are either a reaction product of an ester of (meth)acrylic acid with a hydroxylated hydrogenated polybutadiene by transesterification, or a reaction product of a (meth)acrylic acid with a hydroxylated hydrogenated polybutadiene by direct esterification. The hydroxylated hydrogenated polybutadiene(s) of the present invention may also be referred to as MA (Macro Alcohol), and the polybutadiene-based macromonomer(s) of the present invention may also be referred to as MM (Macro Monomer) in the followings.

The term "(meth)acrylates" used herein refers to esters of one or more acrylic acids, esters of one or more methacrylic acids or mixtures of esters of acrylic acids and methacrylic acids. The term "(meth)acrylic acids" used herein refers to acrylic acids, methacrylic acids and mixtures of acrylic acid and methacrylic acid. The term "alkyl(meth)acrylate" thus includes alkyl-methacrylate, as well as alkyl-acrylate monomers.

Preferably, the sulfur-free poly alkyl(meth)acrylate of the present invention is obtained by radical polymerization of a monomer composition comprising:
(a) 15 to 45 wt.-%, more preferably 20 to 45 wt.-% of one or more polybutadiene-based macromonomer(s) having a number average molecular weight (Mₙ) of 500 to 10,000 g/mol;
(b) 30 to 85 wt.-%, more preferably 40 to 84.9 wt.-%, even more preferably 40 to 79.9 wt.-% of one or more monomer selected from a group consisting of linear or branched C₁-C₆ alkyl(meth)acrylates, styrene and substituted styrene having an alkyl substituent in the side chain and having from 8 to 17 carbon atoms; and
(c) 0 to 20 wt.-%, more preferably 0.1 to 15 wt.-% of one or more monomer selected from a group consisting of linear or branched C₇-C₃₀ alkyl(meth)acrylates;
respectively based on the total weight of the monomer composition.

Preferably, the total amount of the monomers (a), (b), and (c) according to the present invention is selected to sum up to at least 80% by weight, more preferably sums up to at least 85% by weight, even more preferably sums up from 90% to 100% by weight, most preferably sums up from 95% to 100% by weight, based on the total weight of the monomer composition.

The monomer composition of the present invention may further comprise additional monomers, other than the monomers (a), (b) and (c).

According to a preferred embodiment of the present invention, the monomer composition used to prepare the polymers according to the invention further comprises a monomer (d) selected from the group consisting of (meth)acrylate of ether alcohol, aminoalkyl (meth)acrylate, aminoalkyl (meth)acrylamide. Most preferred monomers (d) are 2-(dimethylamino)ethyl methacrylate, N-(3-dimethylaminopropyl)methacrylamide or a mixture thereof. More preferably, the monomer composition comprises from 0 to 5 wt.-%, even more preferably from 0.1 to 3.5 wt.-%, of monomer d), based on the total weight of the monomer composition.

Preferably, the total amount of the monomers (a), (b), (c) and (d) according to the present invention is selected to sum up to at least 80% by weight, more preferably sums up to at least 85% by weight, even more preferably sums up to at least 90%, most preferably sums up from 98% to 100% by weight, based on the total weight of the monomer composition.

The poly alkyl(meth)acrylate according to the present invention has a weight-average molecular weight (M_{w}) from 10,000 to 200,000 g/mol, preferably from 20,000 to 180,000 g/mol, more preferably of from 30,000 to 150,000 g/mol, even more preferably from 40,000 to 120,000 g/mol, and most preferably from 50,000 to 100,000 g/mol.

The weight-average molecular weights (M_{w}) and number average molecular weight (Mₙ) of the polymers are determined by gel permeation chromatography (GPC) using polymethylmethacrylate calibration standards using the following measurement conditions:
Eluent: tetrahydrofuran (THF)
Operation temperature: 40 °C
Column: the column set consists of four columns: PSS-SDV 100 Å 10µm 8.0 × 50 mm, PSS-SDV Linear XL 10 µm 8.0 x 300 mm x 2, PSS-SDV 100 Å 10 µm 8.0 x 300 mm, all columns with an average particle size of 10 µm
Flow rate: 1mL/min
Injected volume: 100 µL
Instrument: Shodex GPC101 consisting of an autosampler, pump and column oven
Detection device: a refractive index detector from Shodex.

An appropriate weight average molecular weight (M_{w}) and the number average molecular weight (Mₙ) of the poly alkyl(meth)acrylate may be adjusted or selected by a person skilled in the art based on his technical knowledge and depending on the application of the composition(s) which comprise the copolymer of the present invention.

Preferably, the polydispersity index (PDI) of the polymer according to the present invention is in the range from 1.0 to 6.0, more preferably of 2.5 to 4.0. The polydispersity index is defined as the ratio of weight-average molecular weight to number-average molecular weight (M_{w}/Mₙ).

The polybutadiene-containing PAMA polymer according to the present invention can also be characterized by their molar degree of branching ("f-branch"). The molar degree of branching refers to the percentage in mol% of macromonomer (monomer (a)), based on the total molar amount of all the monomers in the monomer composition. The molar amount of the macromonomer used is calculated on the basis of the number-average molecular weight Mₙ of the macromonomer. The calculation of the molar degree of branching is described in detail in WO 2007/003238 A1, especially on pages 13 and 14, to which reference is made here explicitly.

Preferably, the polybutadiene-containing PAMA polymers have a molar degree of branching f_{branch} of 0.1 to 5 mol%, more preferably 1.5 to 4 mol% and most preferably 1.5 to 2.5 mol%.

The amount of the sulfur-free CTA for the radical polymerization according to the present invention is preferably 0.1 to 20 wt.-%, more preferably 0.1 to 10 wt.-%, even more preferably 0.2 to 5 wt.-%, based on the total weight of the monomer composition. Further details on the sulfur-free CTA are given herein below.

### Monomer (a):

Monomer (a) of the present invention is a polybutadiene-based macromonomer and is obtainable by transesterification reaction of one or more hydroxylated hydrogenated polybutadiene and one or more (meth)acrylic acid esters or by direct esterification of one or more hydroxylated hydrogenated polybutadiene with one or more (meth)acrylic acid. In other words, the polybutadiene-based macromonomers (a) of the present invention are reaction products of one or more hydroxylated hydrogenated polybutadiene with one or more (meth)acrylates or (meth)acrylic acid.

Transesterification reaction is widely known. For example, it is possible for this purpose to use a heterogeneous catalyst system, such as lithium hydroxide/calcium oxide mixture (LiOH/CaO), pure lithium hydroxide (LiOH), lithium methoxide (LiOMe) or sodium methoxide (NaOMe) or a homogeneous catalyst system such as isopropyl titanate (Ti(OiPr)4) or dioctyltin oxide (Sn(Oct)₂O). The reaction is an equilibrium reaction. Therefore, the low molecular weight alcohol released from the reaction is typically removed, for example, by distillation.

In addition, the macromonomers can be obtained by a direct esterification reaction, for example, from (meth)acrylic acid or (meth)acrylic anhydride, preferably under acidic catalysis using p-toluene sulfonic acid or methane sulfonic acid, or from free methacrylic acid by the DCC method (dicyclohexyl carbodiimide).

Furthermore, the present hydroxylated hydrogenated polybutadiene can be converted to an ester by reaction with an acid chloride such as (meth)acryloyl chloride.

Preferably, in the abovementioned preparations of the esters, polymerization inhibitors such as 4-hydroxy-2,2,6,6-tetramethylpiperidinooxyl radical and/or hydroquinone monomethyl ether may be used.

The term "hydroxylated hydrogenated polybutadiene" used herein refers to a hydrogenated polybutadiene that comprises one or more hydroxyl groups. The hydroxylated hydrogenated polybutadiene may further comprise additional structural units, such as polyether groups derived from the addition of alkylene oxides to a polybutadiene or a maleic anhydride group derived from the addition of maleic anhydride to a polybutadiene. These additional structural units may be introduced into the polybutadiene when the polybutadiene is functionalized with hydroxyl groups.

Preference is given to monohydroxylated hydrogenated polybutadienes. More preferably, the hydroxylated hydrogenated polybutadiene is a hydroxyethyl- or hydroxypropyl-terminated hydrogenated polybutadiene. Particular preference is given to hydroxypropyl-terminated polybutadienes.

These monohydroxylated hydrogenated polybutadienes can be prepared by first converting butadiene monomers by anionic polymerization to polybutadiene. Subsequently, by reaction of the polybutadiene monomers with an alkylene oxide such as ethylene oxide or propylene oxide, a hydroxy-functionalized polybutadiene can be prepared. The polybutadiene may also be reacted with more than one alkylene oxide units, resulting in a polyether-polybutadiene block copolymer having a terminal hydroxyl group. The hydroxylated polybutadiene can be hydrogenated in the presence of a suitable transition metal catalyst.

These monohydroxylated hydrogenated polybutadienes can also be selected from products obtained by hydroboration of (co)polymers of having a terminal double bond (e.g. as described in US Patent No. 4,316,973); maleic anhydride-ene-amino alcohol adducts obtained by an ene reaction between a (co)polymer having a terminal double bond and maleic anhydride with an amino alcohol; and products obtained by hydroformylation of a (co)polymer having a terminal double bond, followed by hydrogenation (e.g. as described in JP Publication No. S63-175096).

Preferably, the hydroxylated hydrogenated polybutadienes as the starting material of the monomer (a) have a hydrogenation level of at least 99%. An alternative measure of the hydrogenation level which can be determined regarding the polymer of the invention is the iodine number. The iodine number refers to the number of grams of iodine which can be added onto 100 g of polymer. Preferably, the polymer of the invention will have an iodine number of not more than 5 g of iodine per 100 g of polymer. The iodine number is determined by the Wijs method according to DIN 53241-1:1995-05.

Preferred hydroxylated hydrogenated polybutadienes can be obtained according to GB 2270317.

According to the present invention, the polybutadiene-based macromonomer (a) is comprised in the monomer composition in an amount of from 10 to 50 wt.-%, preferably from 15 to 45 wt.-%, more preferably from 20 to 45 wt.-%, based on the total weight of the monomers in the monomer composition.

The polybutadiene-based macromonomer (a) of the present invention has a number average molecular weight (Mₙ) of from 500 to 10,000 g/mol, preferably from 1,000 to 6,000 g/mol, more preferably from 1,000 to 5,500 g/mol, even more preferably from 1,500 to 5,000 g/mol.

The polybutadiene-based macromonomer (a) corresponds to one polybutadiene-based macromonomer having a number average molecular weight (Mₙ) of from 500 to 10,000 g/mol or a mixture thereof.

Preferably, the polybutadiene-based macromonomer (a) corresponds to a mixture of two polybutadiene-based macromonomers, more preferably, to a mixture of a first polybutadiene-based macromonomer having a number-average molecular weight (Mₙ) of from 1,000 to 3,000 g/mol, more preferably of from 1,500 to 3,000g/mol, and a second polybutadiene-based macromonomer having a number-average molecular weight (Mₙ) of from 3,500 to 5,500 g/mol, more preferably of from 3,500 to 5,000g/mol.

More preferably, the polybutadiene-based macromonomer (a) is selected from the group consisting of:
- a polybutadiene-based macromonomer having a number-average molecular weight (Mₙ) of from 1,000 to 3,000 g/mol, more preferably of from 1,500 to 3,000 g/mol,
- a polybutadiene-based macromonomer having a number-average molecular weight (Mₙ) of from 3,500 to 5,500 g/mol, more preferably of from 3,500 to 5,000g/mol,
- or a mixture thereof.

The number-average molecular weight (Mₙ) of the macromonomers (a) is determined by gel permeation chromatography (GPC) using polybutadiene calibration standards according to DIN 55672-1 using the following measurement conditions:
Eluent: tetrahydrofuran (THF)
Operation temperature: 35 °C
Columns: the column set consists of one pre-column (PSS-SDV; 10µ; 8 x 50 mm), four PSS-SDV columns with a size of 300 x 8 mm and an average particle size of 10 µm (SDV-LXL, SDV-LinL, 2 columns SDV 100 Å (PSS Standards Service GmbH, Mainz, Germany)), and one solvent-peak separation column with a size of 8x100mm (KF-800D from the company Shodex)
Flow rate: 1mL/min
Injected volume: 100 µL
Instrument: Agilent 1100 series consisting of an autosampler, pump and column oven
Detection device: a refractive index detector from the Agilent 1100 series.

### Monomer (b):

Monomer (b) of the present invention is selected from a group consisting of linear or branched C₁-C₆ alkyl(meth)acrylates, styrene and substituted styrene having an alkyl substituent in the side chain and having from 8 to 17 carbon atoms.

Examples of the linear or branched C₁-C₆ alkyl(meth)acrylates are, but not limited to, methyl methacrylate (MMA), methyl and ethyl acrylate, propyl methacrylate, butyl methacrylate (BMA) and acrylate (BA), isobutyl methacrylate (IBMA), hexyl and cyclohexyl methacrylate, cyclohexyl acrylate and combinations thereof.

Examples of the substituted styrene having an alkyl substituent in the side chain and having from 8 to 17 carbon atoms are, but not limited to, alpha-methylstyrene and alpha-ethylstyrene, substituted styrenes having an alkyl substituent on the ring, such as vinyltoluene and para-methylstyrene, halogenated styrenes, for example monochlorostyrenes, dichlorostyrenes, tribromostyrenes and tetrabromostyrenes, nitrostyrene.

The monomer (b) may be a single monomer such as one kind selected from the linear or branched C₁-C₆ alkyl(meth)acrylates or styrene or styrene derivatives, or the monomer (b) may be a mixture of two or more monomers selected from the abovementioned groups of the linear or branched C₁-C₆ alkyl(meth)acrylates, styrene and substituted styrene.

Regardless of whether the monomer (b) is a single monomer or a mixture of two or more monomers, the content thereof in the monomer composition is from 10 to 90 wt.-%, preferably from 30 to 85 wt.-%, more preferably from 40 to 84.9 wt.-%, even more preferably from 40 to 79. 9 wt.-%, based on the total weight of the monomers in the monomer composition.

The ratio of the linear or branched C₁-C₆ alkyl(meth)acrylates to styrene and/or substituted styrene may be selected from a wide range of 1 to 99 to 99 to 1, when the monomer (b) is a mixture of the C₁-C₆ alkyl(meth)acrylates to styrene and/or substituted styrene.

A person skilled in the art should be able to adjust or select the ratio of the linear or branched C₁-C₆ alkyl(meth)acrylates, styrene and substituted styrene having an alkyl substituent in the side chain and having from 8 to 17 carbon atoms within the abovementioned range based on his technical knowledge and considering the application when the monomer (b) consists of several kinds of monomers. Preferred monomer b) is methyl methacrylate (MMA), butyl methacrylate (BMA), styrene or a mixture thereof.

### Monomer (c):

Monomer (c) of the present invention is one or more monomers selected from a group consisting of linear or branched C₇-C₃₀ alkyl(meth)acrylates.

The term "linear or branched C₇-C₃₀ alkyl(meth)acrylates" refers to esters of (meth)acrylic acid and linear or branched alcohols having 7 to 30 carbon atoms. The term encompasses individual (meth)acrylic esters with an alcohol of a particular length, and likewise mixtures of (meth)acrylic esters with alcohols of different lengths.

Examples of the C₇-C₃₀ alkyl(meth)acrylates include, but not limited to, 2-butyloctyl(meth)acrylate, 2-hexyloctyl(meth)acrylate, decyl(meth)acrylate, 2-butyldecyl(meth)acrylate, 2-hexyldecyl(meth)acrylate, 2-octyldecyl(meth)acrylate, undecyl(meth)acrylate, 5-methylundecyl(meth)acrylate, dodecyl(meth)acrylate, 2-methyldodecyl(meth)acrylate, 2-hexyldodecyl(meth)acrylate, 2-octyldodecyl (meth)acrylate, tridecyl(meth)acrylate, 5-methyltridecyl(meth)acrylate, tetradecyl(meth)acrylate, 2-decyltetradecyl(meth)acrylate, pentadecyl(meth)acrylate, hexadecyl(meth)acrylate, 2-methylhexadecyl(meth)acrylate, 2-dodecylhexadecyl(meth)acrylate, heptadecyl(meth)acrylate, 5-isopropylheptadecyl(meth)acrylate, 4-tert-butyloctadecyl(meth)acrylate, 5-ethyloctadecyl(meth)acrylate, 3-isopropyloctadecyl(meth)acrylate, octadecyl(meth)acrylate, 2-decyloctadecyl(meth)acrylate, 2-tetradecyloctadecyl(meth)acrylate, nonadecyl(meth)acrylate, eicosyl(meth)acrylate, cetyleicosyl(meth)acrylate, lauryl methacrylate (LMA), stearyl methacrylate (SMA), docosyl(meth)acrylate, eicosyltetratriacontyl(meth)acrylate, 2-decyl-tetradecyl(meth)acrylate, 2-decyloctadecyl(meth)acrylate, 2-dodecyl-1-hexadecyl(meth)acrylate, 1,2-octyl-1-dodecyl(meth)acrylate, 2-tetradecylocadecyl(meth)acrylate, 1,2-tetradecyl-octadecyl(meth)acrylate and 2-hexadecyl-eicosyl(meth)acrylate, n-tetracosyl(meth)acrylate, n-triacontyl(meth)acrylate and/or n-hexatriacontyl(meth)acrylate.

Preferably, monomer (c) is selected from a group consisting of linear or branched C₇-C₂₂ alkyl(meth)acrylates, more preferably selected from a group consisting of linear or branched C₁₂-C₁₅ alkyl(meth)acrylates, linear or branched C₁₆-C₁₈ alkyl(meth)acrylates or a mixture thereof.

The term "linear or branched C₇-C₂₂ alkyl(meth)acrylates" used herein refers to esters of (meth)acrylic acid and linear or branched alcohols having 7 to 22 carbon atoms. The term encompasses individual (meth)acrylic esters with an alcohol of a particular length, and likewise mixtures of (meth)acrylic esters with alcohols of different lengths.

Similarly, the "linear or branched C₁₂-C₁₅ alkyl(meth)acrylates" used herein refers to esters of (meth)acrylic acid and linear or branched alcohols having 12 to 15 carbon atoms. The term encompasses individual (meth)acrylic esters with an alcohol of a particular length, and likewise mixtures of (meth)acrylic esters with alcohols of different lengths.

Similarly, the "linear or branched C₁₆-C₁₈ alkyl(meth)acrylates" used herein refers to esters of (meth)acrylic acid and linear or branched alcohols having 16 to 18 carbon atoms. The term encompasses individual (meth)acrylic esters with an alcohol of a particular length, and likewise mixtures of (meth)acrylic esters with alcohols of different lengths.

Examples of the C₁₆-C₁₈ alkyl(meth)acrylates include, but not limited to, hexadecyl (meth)acrylate, 2-methylhexadecyl (meth)acrylate, heptadecyl (meth)acrylate, 5-isopropylheptadecyl (meth)acrylate, 4-tert-butyloctadecyl (meth)acrylate, 5-ethyloctadecyl (meth)acrylate, 3-isopropyloctadecyl (meth)acrylate, octadecyl (meth)acrylate, nonadecyl (meth)acrylate, eicosyl (meth)acrylate, cetyleicosyl (meth)acrylate, stearyl meth)acrylate (SMA), docosyl (meth)acrylate, behenyl (meth)acrylate, eicosyltetratriacontyl (meth)acrylate, cycloalkyl (meth)acrylates, 2,4,5-tri-t-butyl-3-vinylcyclohexyl (meth)acrylate, and 2,3,4,5-tetra-t-butylcyclohexyl (meth)acrylate. Particularly preferred C₁₆₋₁₈ alkyl(meth)acrylates is stearyl methacrylate (SMA).

Particularly preferred monomer (c) is lauryl methacrylate (LMA), stearyl methacrylate (SMA) or a mixture thereof.

According to the present invention, monomer (c) is comprised in the monomer composition in an amount of 0 to 30 wt.-%, preferably 0 to 20 wt.-%, more preferably 0.1 to 15 wt.-%, based on the total weight of the monomers in the monomer composition.

The monomer composition of the present invention may comprise one or more other monomers than the monomers (a), (b) and (c), wherein the amounts of the monomers (a), (b), (c) and the other monomer(s) is selected to sum up to at least 85 wt.-%, preferably sums up to at least 90 wt.-%, more preferably sums up from 95 to 100 wt.-%, most preferably from 98 to 100 wt.-%, based on the total amount of the monomers in the monomer composition.

Preferably, additional monomers, other than the monomers (a), (b) and (c) which may be comprised in the monomer composition, are monomers (d) and (e) as follows:

### Monomer (d):

According to a preferred embodiment of the invention, the monomer composition according to the present invention further comprises one or more monomer (d) selected from (meth)acrylates of ether alcohols, aminoalkyl (meth)acrylates, aminoalkyl (meth)acrylamides.

When monomer (d) is comprised in the monomer composition, the amount of the monomer (d) in the monomer composition may be from 0 to 5 wt.-% preferably from 0.1 to 3.5 wt.-%, based on the total weight of the monomers in the monomer composition. More preferably, the amount of the monomer (d) in the monomer composition may be from 0 to 5 wt.-% preferably from 0.1 to 3.5 wt.-%, based on the total weight of the monomers in the monomer composition, wherein the total amount of the monomers (a), (b) (c) and (d) sums up from 85 to 100 wt.-%, even more preferably sums up from 90 to 100 wt.-%, based on the total weight of the monomer composition.

Particularly preferred monomer (d) is/are selected from 2-(dimethylamino)ethyl methacrylate (DMAEMA), N-(3-dimethylaminopropyl)methacrylamide (DMAPMAM), or a mixture thereof.

### Monomers (e):

In another preferred embodiment of the present invention, the monomer composition may further comprise one or more additional monomers (e), in addition to the monomers (a) to (c), and optionally (d).

Preferably, such additional monomer(s) is/are selected from a group consisting of vinyl esters having from 1 to 11 carbon atoms in the acyl group, vinyl ethers having from 1 to 10 carbon atoms in the alcohol group, dispersing oxygen- functionalized monomers, heterocyclic (meth)acrylates, heterocyclic vinyl compounds, monomers containing a covalently bonded phosphorous atom and monomers containing epoxy groups, more preferably one or more monomer (e) may be selected from a group consisting of (meth)acrylates of ether alcohols, hydroxy alkyl (meth)acrylates, vinyl monomers containing aromatic groups.

Suitable vinyl esters having from 1 to 11 carbon atoms in the acyl group are selected from the group consisting of vinyl formate, vinyl acetate, vinyl propionate, vinyl butyrate; preferably vinyl esters including from 2 to 9, more preferably from 2 to 5 carbon atoms in the acyl group, wherein the acyl group may be linear or branched.

Suitable vinyl ethers having from 1 to 10 carbon atoms in the alcohol group are selected from the group consisting of vinyl methyl ether, vinyl ethyl ether, vinyl propyl ether, vinyl butyl ether; preferably vinyl ethers including from 1 to 8, more preferably from 1 to 4 carbon atoms in the alcohol group, wherein the alcohol group may be linear or branched.

Suitable monomers which are derived from dispersing oxygen- functionalized monomers are selected from the group consisting of hydroxyalkyl(meth)acrylates, such as 3-hydroxypropyl(meth)acrylate, 3,4-dihydroxybutyl(meth)acrylate, 2-hydroxyethyl(meth)acrylate, 2-hydroxypropyl(meth)acrylate, 2,5-dimethyl-1,6-hexanediol(meth)acrylate, 1,10-decanediol(meth)acrylate, p-hydroxystyrene, vinyl alcohol, alkenols ((methyl)allyl alcohol having 3 to 12 carbon atoms), multivalent (3-8 valent) alcohol (glycerol, pentaerythritol, sorbitol, sorbitan, doglycerides, sugars) ether or meth(acrylate); C1-8-alkyloxy-C2-4-alkyl(meth)acrylates, such as methoxypropyl(meth)acrylate, methoxybutyl (meth)acrylate, methoxyheptyl(meth)acrylate, methoxyhexyl(meth)acrylate, methoxypentyl(meth)acrylate, methoxyoctyl(meth)acrylate, ethoxyethyl(meth)acrylate, ethoxypropyl(meth)acrylate, ethoxybutyl(meth)acrylate, ethoxyheptyl(meth)acrylate, ethoxyhexyl(meth)acrylate, ethoxypentyl(meth)acrylate, ethoxyoctyl(meth)acrylate, propoxymethyl(meth)acrylate, propoxyethyl(meth)acrylate, propoxypropyl(meth)acrylate, propoxybutyl(meth)acrylate, propoxyheptyl(meth)acrylate, propoxyhexyl(meth)acrylate, propoxypentyl(meth)acrylate, propoxyoctyl(meth)acrylate, butoxymethyl(meth)acrylate, butoxyethyl(meth)acrylate, butoxypropyl(meth)acrylate, butoxybutyl(meth)acrylate, butoxyheptyl(meth)acrylate, butoxyhexyl(meth)acrylate, butoxypentyl(meth)acrylate and butoxyoctyl(meth)acrylate, ethoxyethyl(meth)acrylate and butoxyethyl(meth)acrylate are being preferred.

Suitable heterocyclic (meth)acrylates are selected form the group consisting of 2-(1-imidazolyl)ethyl(meth)acrylate, 2-(4-morpholinyl)ethyl(meth)acrylate, 1-(2-methacryloyloxyethyl)-2-pyrrolidone, N-methacryloylmorpholine, N-methacryloyl-2-pyrrolidinone, N-(2-methacryloyloxyethyl)-2-pyrrolidinone, N-(3-methacryloyloxypropyl)-2-pyrrolidinone.

Suitable heterocyclic vinyl compounds are selected from the group consisting of 2-vinylpyridine, 4-vinylpyridine, 2-methyl-5-vinylpyridine, 3-ethyl-4-vinylpyridine, 2,3-dimethyl-5-vinylpyridine, vinylpyrimidine, vinylpiperidine, 9-vinylcarbazole, 3-vinylcarbazole, 4-vinylcarbazole, 1-vinylimidazole, 2-methyl-1-vinylimidazole, N-vinylpyrrolidone, N-vinylpyrrolidine, 3-vinylpyrrolidine, N-vinyl-caprolactam, N-vinylbutyrolactam, vinyloxolane, vinylfuran, vinyloxazoles and hydrogenated vinyloxazoles.

Monomers containing a covalently bonded phosphorous atom are selected from the group consisting of 2-(dimethylphosphato)propyl(meth)acrylate, 2-(ethylenephosphito)propyl (meth)acrylate, dimethylphosphinomethyl(meth)acrylate, dimethylphosphonoethyl(meth)acrylate, diethyl(meth)acryloyl phosphonate, dipropyl(meth)acryloyl phosphate, 2 (dibutylphosphono)ethyl (meth)acrylate, diethylphosphatoethyl(meth)acrylate, 2-(dimethylphosphato)-3-hydroxypropyl (meth)acrylate, 2-(ethylenephosphito)-3-hydroxypropyl(meth)acrylate, 3-(meth)acryloyloxy-2-hydroxypropyl diethyl phosphonate, 3-(meth)acryloyloxy-2-hydroxypropyl dipropyl phosphonate, 3-(dimethylphosphato)-2-hydroxypropyl(meth)acrylate, 3-(ethylenephosphito)-2-hydroxypropyl(meth)acrylate, 2-(meth)acryloyloxy-3-hydroxypropyl diethyl phosphonate, 2-(meth)acryloyloxy-3-hydroxypropyl dipropyl phosphonate and 2-(dibutylphosphono)-3-hydroxypropyl(meth)acrylate.

Suitable monomers containing epoxy groups are, for example, glycidyl(meth)acrylate and glycidyl(meth)allyl ether and the like.

The amount of the further additional monomer(s) (e) in the monomer composition may be from 0 to 10 wt.-%, preferably 0.1 to 5 wt.-%, more preferably 0.5 to 3 wt.-%, based on the total weight of the monomers in the monomer composition.

Preferably, the total amount of the monomers (a), (b), (c), optionally monomers (d) and optionally monomer(s) (e) is selected to sum up from 90 to 100 wt.-%, more preferably to 100% by weight, based on the total weight of the monomer composition.

### Sulfur-free chain-transfer agents (CTA):

According to the present invention, the poly alkyl(meth)acrylate is obtained by radical polymerization of the monomer composition in the presence of at least one sulfur-free chain transfer agent (CTA), and the one or more sulfur-free CTA is selected from a group consisting of:
(i) terpenoids;
(ii) oligomers of methacrylate or methacrylic acid oligomers having a weight average molecular weight (M_{w}) of less than 15,000 g/mol;
(iii) styrene oligomers having a weight average molecular weight (M_{w}) of less than 1,000 g/mol;
(iv) Co(ll) complexes;
(v) addition-fragmentation chain transfer agents represented by a chemical formula (I), 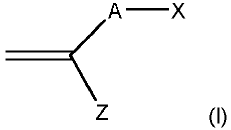 wherein A is -O- or -CH₂-, X is C₁-C₄ alkyl, peroxy C₁-C₆ alkyl, peroxy C₆-C₁₀ aralkyl, -CH₂Ph, or -COOR¹ with R¹ being C₁-C₄ alkyl, and Z is Ph, -CN, -OR¹ with R¹ being C₁-C₄ alkyl, COOR¹ with R¹ being C₁-C₄ alkyl, or -CONH₂;
(vi) quinones;
(vii) ethylenically unsaturated hydrocarbons having 4-14 carbon atoms;
(viii) isopropanol;
or a mixture thereof.

Preferably, the sulfur-free CTA (i) is selected from a group consisting of limonene, myrcene, α-terpinene, β-terpinene, γ-terpinene, terpinolene, α-pinene, β-pinene, and dipentene, but is not limited to these compounds.

Preferably, the sulfur-free CTA (ii) is obtainable by polymerizing at least one monomer selected from a group consisting of C₁-C₃₆ alkyl methacrylate, dispersing oxygen- and/or nitrogen-functionalized methacrylate, heterocyclic methacrylate, aromatic methacrylate, and methacrylic acid, but not limited to the compounds obtained by the said process.

Preferably, the sulfur-free CTA (iii) is selected from a group consisting of α-methyl styrene dimer, and styrene dimer.

Preferably, the sulfur-free CTA (iv) is a Co(ll) complex which comprises Co(ll) and at least one ligand according to formulae (II) to (VII): 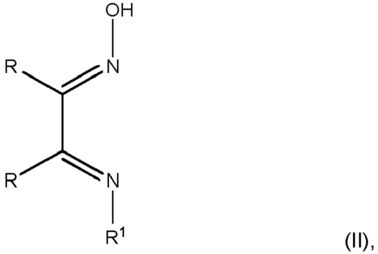 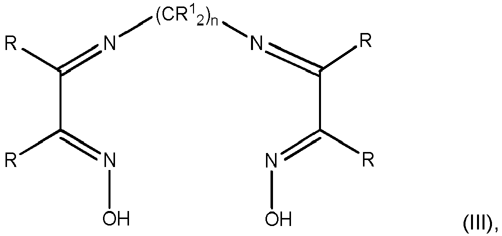 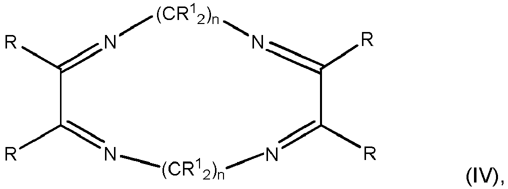 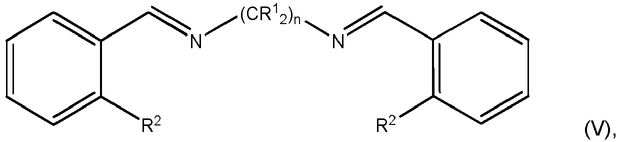 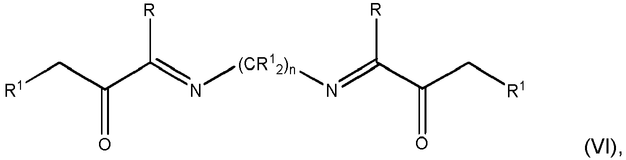 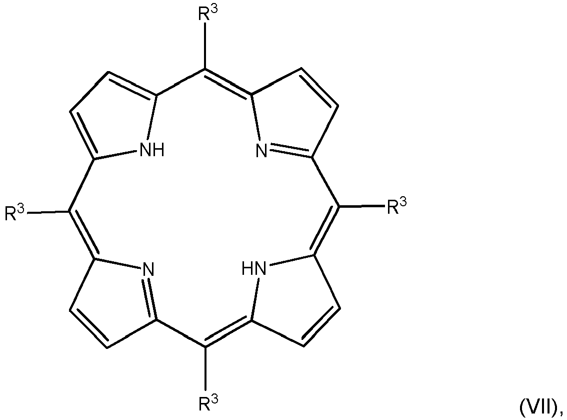 wherein each R independently represents Ph or C₁-C₁₂ alkyl, or two R on adjacent carbon atoms together represent C₅-C₈ alkylene; each R¹ is independently H, -OH or C₁-C₁₂ alkyl; each R² is independently -OH or -NH; each R³ is independently H, Ph, C₁-C₁₂ alkyl, hydroxyphenyl, or C₁-C₄ alkoxyphenyl; and each n is independently an integer 2 or 3.

The abovementioned Co(ll) complex is known, for example, from WO2014/106589A1.

Preferably, the sulfur-free CTA (v) is preferably selected from a group consisting of α-benzyloxystyrene, α-benzyloxyacrylonitrile, methyl α-benzyloxyacrylate, α-benzyoloxyacrylamide, ketene diethyl acetal, methyl α-benzyloxyvinyl ether, α-isopropoxystyrene, or a mixture thereof.

Preferably, the sulfur-free CTA (vi) is selected from a group consisting of 1,4-naphtoquinone, 2-methyl-1,4-napotoquinone, 2-hydroxy-1,4-naphtoquinone, or a mixture thereof.

Preferably, the sulfur-free CTA (vii) is selected from a group consisting of 1,4-cyclohexadiene, 2-methyl-1,4-cyclohexadiene, 1,2-dihydronaphthalene, 9,10-dihydrophenanthrene, octahydrophenantrene, 9,10-dihydroantracene, octahydroanthracene, tetralin, indene, 1-butene, 1-hexene, -octene, 1-decene, and 1-dodecene, or a mixture thereof.

According to the present invention, sulfur content in the poly alkyl(meth)acrylates is not preferable. However, if necessary, one or more conventional sulfur-containing CTA may be used as long as the content of sulfur-containing chain transfer agent(s) in the monomer composition is kept to less than 0.05 wt.-%, based on the total weight of the monomer composition.

### Preparation of the sulfur-free copolymers according to the invention

According to the present invention, the sulfur-free poly alkyl(meth)acrylate copolymer is prepared by a process comprising at least the steps of:
(i) providing the monomer composition as described above, and
(ii) initiating radical polymerization in the monomer composition.

The radical polymerization of the present invention is carried out in presence of one or more sulfur-free chain transfer agents as described above.

Standard free-radical polymerization is detailed, inter alia, in Ullmann's Encyclopedia of Industrial Chemistry, Sixth Edition. In general, a polymerization initiator and optionally a chain transfer agent are used for this purpose.

The Atom Transfer Radical Polymerization (ATRP) method per se is known. It is assumed that this is a "living" free-radical polymerization, but no restriction is intended by the description of the mechanism. In these processes, a transition metal compound is reacted with a compound having a transferable atom group. This involves transfer of the transferable atom group to the transition metal compound, as a result of which the metal is oxidized. This reaction forms a free radical which adds onto ethylenic groups. However, the transfer of the atom group to the transition metal compound is reversible, and so the atom group is transferred back to the growing polymer chain, which results in formation of a controlled polymerization system. It is accordingly possible to control the formation of the polymer, the molecular weight and the molecular weight distribution.

This reaction regime is described, for example, by J.-S. Wang, et al., J. Am. Chem. Soc, vol. 117, p. 5614-5615 (1995), by Matyjaszewski, Macromolecules, vol. 28, p. 7901-7910 (1995). In addition, patent applications WO 96/30421, WO 97/47661, WO 97/18247, WO 98/40415 and WO 99/10387 disclose variants of the above-elucidated ATRP. In addition, the polymers of the invention can also be obtained via (Reversible Addition Fragmentation Chain Transfer (RAFT) methods, for example. This method is described in detail, for example, in WO 98/01478 and WO 2004/083169.

The polymerization can be conducted under standard pressure, reduced pressure or elevated pressure. The polymerization temperature is also uncritical. In general, however, it is in the range from -20 to 200°C, preferably 50 to 150°C and more preferably 80 to 130°C.

Preferably, the monomer composition provided in step (i) is diluted by addition of an oil to provide a reaction mixture. The amount of the monomer composition, i.e. the total amount of monomers, relative to the total weight of the reaction mixture is preferably 20 to 90 % by weight, more preferably 40 to 80 % by weight, most preferably 50 to 70 % by weight.

Preferably, the oil used for diluting the monomer composition is an API Group II, III, IV or V oil, or a mixture thereof. More preferably, an API Group II oil, an API Group III oil or a mixture thereof is used to dilute the monomer composition.

According to the present invention, one or more radical initiator may be used for the radical polymerization of the monomer composition.

Preferably, the step (ii) comprises the addition of a radical initiator.

Suitable radical initiators are, for example, azo initiators, such as azobis-isobutyronitrile (AIBN), 2,2'-azobis(2-methylbutyronitrile) (AMBN) and 1,1-azobiscyclohexanecarbonitrile, and peroxy compounds such as methyl ethyl ketone peroxide, acetylacetone peroxide, dilauryl peroxide, tert-butyl peroxy-2-ethylhexanoate, ketone peroxide, tert-butyl peroctoate, methyl isobutyl ketone peroxide, cyclohexanone peroxide, dibenzoyl peroxide, tert-butyl peroxybenzoate, tert-butyl peroxyisopropylcarbonate, 2,5-bis(2-ethylhexanoylperoxy)-2,5-dimethylhexane, tert-butyl peroxy-2-ethylhexanoate, tert-butyl peroxy-3,5,5-trimethylhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide and bis(4-tert-butylcyclohexyl) peroxydicarbonate.

Preferably, the radical initiator is selected from the group consisting of 2,2'-azobis(2-methylbutyronitrile), 2,2-bis(tert-butylperoxy)butane, tert-butylperoxy 2-ethylhexanoate, 1,1-di-tert-butylperoxy-3,3,5-trimethylcyclohexan, tert-butyl peroxybenzoate and tert-butylperoxy-3,5,5-trimethylhexanoat. Particularly preferred initiators are tert-butylperoxy 2-ethylhexanoate, 2,2-bis(tert-butylperoxy) butane (BTPB) and tert-butyl 2-ethylperoxyhexanoate (tBPO).

Preferably, the total amount of radical initiator relative to the total weight of the monomer composition is from 0.01 to 20 % by weight, more preferably from 0.02 to 15 % by weight.

The total amount of radical initiator may be added in a single step, or the radical initiator may be added in several steps over the course of the polymerization reaction. Preferably, the radical initiator is added in several steps. For example, a part of the radical initiator may be added to initiate radical polymerization and a second part of the radical initiator may be added 0.5 to 3.5 hours after the initial dosage.

According to the present invention, the poly alkyl(meth)acrylate is prepared preferably without using any sulfur-containing chain transfer agent. However, when sulfur -containing CTA such as n-dodecyl mercaptane or2-mercaptoethanol is used for the radical polymerization of the monomer composition, the content thereof should be less than 0.05 wt.-% based on the total weight of the monomer composition. Preferably, sulfur-containing chain transfer agent is not comprised in the monomer composition of the present invention or not used or added in the radical polymerization of the monomer composition in order to obtain the sulfur-free poly alky(meth)acrylate of the present invention.

### Compositions comprising the sulfur-free poly alkyl(meth)acrylate according to the invention

The present invention also relates to a composition comprising:
(A) a base oil; and
(B) the sulfur-free poly alkyl(meth)acrylate copolymer as described above in detail.

The composition of the present invention may be an additive composition comprising the base oil (A) as diluent and the sulfur-free poly alkyl(meth)acrylate copolymer (B) according to the present invention. The additive composition may, for example, be added as a viscosity index improver (VII) or a pour point depressant (PPD) and also as a corrosion inhibitor to fluids which come into direct contact with metal or metal parts of mechanical or electrical devices. Typically, the additive composition comprises a relatively high amount of polymer according to the present invention.

The composition of the present invention may also be a fluid composition comprising one or more base oil(s) (A) as diluent and the poly alkyl(meth)acrylate copolymer (B) according to the present invention which comes into direct contact with metal or metal parts of mechanical or electrical devices, such as a lubricant, a dielectric fluid, a coolant or a fuel. The composition of the present invention as the said fluid may optionally comprise further additives as explained below in detail. The composition may, for example, be used as a transmission fluid or an engine oil, a lubricating oil or a coolant for mechanical and electrical devices of vehicles such as automotives, trains, aircrafts or the like, or as a fuel. The composition comprises in this case a lower amount of the polymer according to the present invention as compared to the above-mentioned additive composition.

The concentration of the poly alkyl(meth)acrylate copolymer according to the present invention in the above-mentioned compositions (also called treat rate) can thus vary in broad ranges, such as from 0.1 to 99.5 % by weight, or from 0.5 to 99.5 % by weight, depending on the purpose of their use. When the composition is used as an additive composition, the amount of the one or more base oil (component (A)) is preferably from 0.5 to 80 % by weight, more preferably from 50 to 80 % by weight and the amount of polymer (component (B)) is preferably from 20 to 99.5 % by weight, more preferably from 20 to 50 % by weight, based on the total weight of the additive composition, respectively.

When the composition is used as a lubricant, a dielectric fluid, a coolant or as a fuel, the amount of base oil (component (A)) is preferably from 70 to 99.9% by weight, more preferably from 80 to 99.9 % by weight, even more preferably from 85 to 99.5 % by weight, and the amount of copolymer (component (B)) is preferably from 0.1 to 30% by weight, more preferably from 0.1 to 20 % by weight, even more preferably from 0.5 to 15 % by weight of the polymer, based on the total weight of the composition, respectively.

Preferably, the amounts of (A) and (B) sum up from 95 to 100 % by weight. The rest may be conventional additives.

### Base oils:

The base oil (A) to be used in the composition preferably comprises an oil of appropriate viscosity. Such oils include, but not limited to, natural and synthetic oils, oil derived from hydrocracking, hydrogenation, and hydro-finishing, unrefined, refined, re-refined oils or mixtures thereof.

The base oil may also be defined by the American Petroleum Institute (API) (see April 2008 version of "Appendix E-API Base Oil Interchangeability Guidelines for Passenger Car Motor Oils and Diesel Engine Oils", section 1.3 Sub-heading 1.3. "Base Stock Categories").

The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulfur they contain and by their viscosity indices; Group IV are poly-alpha-olefins; and Group V consists of all others, including e.g. ester oils. The Table 1 below illustrates these API classifications.

**Table 1: Group oil API classifications (content in wt%)**

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

Preferably, for the purpose of the present invention, API Group I oils which contain sulfur in an amount of higher than 0.03 wt% are excluded from the composition.

The kinematic viscosity at 100°C (KV₁₀₀) of appropriate base oils used to prepare a lubricant composition in accordance with the present invention is preferably in the range of 1 mm²/s to 10 mm²/s, more preferably in the range of 1 mm²/s to 8 mm²/s, even more preferably of 1 mm²/s to 5 mm²/s, according to ASTM D7042.

Further base oils which can be used in accordance with the present invention are Group II to III Fischer-Tropsch derived base oils.

Fischer-Tropsch derived base oils are known in the art. The term "Fischer-Tropsch derived" means that a base oil is, or is derived from, a synthesis product of a Fischer-Tropsch process. A Fischer-Tropsch-derived base oil may also be referred to as a GTL (Gas-To-Liquids) base oil. Suitable Fischer-Tropsch derived base oils that may be conveniently used as the base oil in the lubricating composition of the present invention are those as, for example, disclosed in EP0776959, EP0668342, WO97/21788, WO00/15736, WO00/14188, WO00/14187, WO00/14183, WO00/14179, WO00/08115, WO99/41332, EP1029029, WO01/18156, WO01/57166 and WO2013/189951.

Especially for transmission oil formulations, base oils of API Group III and mixtures of different Group III oils are used.

Preferably, the one or more base oil(s) (A) is selected from the group consisting of an API Group II base oil, an API Group III base oil or a mixture thereof.

The composition preferably has a viscosity index of more than 150, more preferably of more than 180. The viscosity index is measured according to ASTM D2270.

The composition according to the invention may also contain further additives selected from a group consisting of friction modifiers, dispersants, defoamers, detergents, antioxidants, pour point depressants, anti-wear additives, extreme pressure additives, anticorrosion additives other than copper corrosion inhibitors, dyes and mixtures thereof.

Appropriate dispersants include poly(isobutylene) derivatives, for example poly(isobutylene)succinimides (PIBSIs), including borated PIBSIs; and ethylene-propylene oligomers having N/O functionalities.

Dispersants (including borated dispersants) are preferably used in an amount of 0 to 5% by weight, based on the total amount of the lubricant composition.

Suitable defoamers are silicone oils, fluorosilicone oils and fluoroalkyl ethers.

The defoaming agent is preferably used in an amount of 0.005 to 0.1 % by weight, based on the total amount of the composition.

Preferred detergents include metal-containing compounds, for example phenoxides; salicylates; thiophosphonates, especially thiopyrophosphonates, thiophosphonates and phosphonates; sulfonates and carbonates. As metal, these compounds may contain especially calcium, magnesium and barium. These compounds may preferably be used in neutral or overbased form.

Detergents are preferably used in an amount of 0.2 to 1 % by weight, based on the total amount of the composition.

The suitable antioxidants include, for example, phenol-based antioxidants and amine-based antioxidants.

Phenol-based antioxidants include, for example, octadecyl-3-(3,5-di-tert-butyl-4-hydroxyphenyl)propionate; 4,4'-methylenebis(2,6-di-tert-butylphenol); 4,4'-bis(2,6-di-t-butylphenol); 4,4'-bis(2-methyl-6-t-butylphenol); 2,2'-methylenebis(4-ethyl-6-t-butylphenol); 2,2'-methylenebis(4-methyl-6-t-butyl phenol); 4,4'-butylidenebis(3-methyl-6-t-butylphenol); 4,4'-isopropylidenebis(2,6-dit-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-t-butyl-4-methylphenol; 2,6-di-t-butyl-4-ethyl-phenol; 2,4-dimethyl-6-t-butylphenol; 2,6-di-t-amyl-p-cresol; 2,6-di-t-butyl-4-(N,N'-dimethylaminomethylphenol); 4,4'-thiobis(2-methyl-6-t-butylphenol); 4,4'-thiobis(3-methyl-6-t-butylphenol); 2,2'-thiobis(4-methyl-6-t-butylphenol); bis(3-methyl-4-hydroxy-5-t-butylbenzyl) sulfide; bis(3,5-di-t-butyl-4-hydroxybenzyl)sulfide; n-octyl-3-(4-hydroxy-3,5-di-t-butylphenyl)propionate; n-octadecyl-3-(4-hydroxy-3,5-di-t-butylphenyl)propionate; 2,2'-thio[diethyl-bis-3-(3,5-di-t-butyl-4-hydroxyphenyl)propionate]. Of those, especially preferred are bis-phenol-based antioxidants and ester group containing phenol-based antioxidants.

The amine-based antioxidants include, for example, monoalkyldiphenylamines such as monooctyldiphenylamine, monononyldiphenylamine,; dialkyldiphenylamines such as 4,4'-dibutyldiphenylamine, 4,4'-dipentyldiphe nylamine, 4,4'- dihexyldiphenylamine, 4,4'-diheptyldiphenylamine, 4,4'-dioctyldiphenylamine, 4,4'-dinonyldiphenylamine; polyalkyldiphenylamines such as tetrabutyldiphenylamine, tetrahexyldiphenylamine, tetraoctyldiphenylamine, tetranonyldiphenylamine; naphthylamines, concretely alpha-naphthylamine, phenyl-alpha-naphthylamine and further alkyl-substituted phenyl-alpha-naphthylamines such as butylphenyl-alpha-naphthylamine, pentylphenyl-alpha-naphthylamine, hexylphenyl-alpha-naphthylamine, heptylphenyl-alpha-naphthylamine, octylphenyl-alpha-naphthylamine, nonylphenyl-alpha-naphthylamine. Of those, diphenylamines are preferred to naphthylamines, from the viewpoint of the antioxidation effect thereof.

Suitable antioxidants may further be selected from the group consisting of compounds containing sulfur and phosphorus, for example metal dithiophosphates, for example zinc dithiophosphates (ZnDTPs), "OOS triesters" = reaction products of dithiophosphoric acid with activated double bonds from olefins, cyclopentadiene, norbornadiene, α-pinene, polybutene, acrylic esters, maleic esters (ashless on combustion); organosulfur compounds, for example dialkyl sulfides, diaryl sulfides, polysulfides, modified thiols, thiophene derivatives, xanthates, thioglycols, thioaldehydes, sulfur-containing carboxylic acids; heterocyclic sulfur/nitrogen compounds, especially dialkyldimercaptothiadiazoles, 2-mercaptobenzimidazoles; zinc bis(dialkyldithiocarbamate) and methylene bis(dialkyldithiocarbamate); organophosphorus compounds, for example triaryl and trialkyl phosphites; organocopper compounds and overbased calcium- and magnesium-based phenoxides and salicylates.

Antioxidants are used in an amount of 0 to 15% by weight, preferably 0.1 to 10% by weight, more preferably 0.5 to 5% by weight, based on the total amount of the composition.

The pour-point depressants include ethylene-vinyl acetate copolymers, chlorinated paraffin-naphthalene condensates, chlorinated paraffin-phenol condensates, polyalkyl(meth)acrylates, polyalkylstyrenes. Preferred are polyalkyl(meth)methacrylates having a mass-average molecular weight of from 5.000 to 200.000 g/mol.

The amount of the pour point depressant is preferably from 0.1 to 5% by weight based on the total amount of the composition.

The preferred antiwear and extreme pressure additives include sulfur-containing compounds such as zinc dithiophosphate, zinc di-C₃₋₁₂-alkyldithiophosphates (ZnDTPs), zinc phosphate, zinc dithiocarbamate, molybdenum dithiocarbamate, molybdenum dithiophosphate, disulfides, sulfurized olefins, sulfurized oils and fats, sulfurized esters, thiocarbonates, thiocarbamates, polysulfides; phosphorus-containing compounds such as phosphites, phosphates, for example trialkyl phosphates, triaryl phosphates, e.g. tricresyl phosphate, amine-neutralized mono- and dialkyl phosphates, ethoxylated mono- and dialkyl phosphates,phosphonates, phosphines, amine salts or metal salts of those compounds; sulfur and phosphorus-containing anti-wear agents such as thiophosphites, thiophosphates, thiophosphonates, amine salts or metal salts of those compounds.

The antiwear agent may be present in an amount of 0 to 3% by weight, preferably 0.1 to 1.5% by weight, more preferably 0.5 to 0.9% by weight based on the total amount of the composition.

The preferred friction modifiers may include mechanically active compounds, for example molybdenum disulfide, graphite (including fluorinated graphite), poly(trifluorethylene), polyamide, polyimide; compounds which form adsorption layers, for example long-chain carboxylic acids, fatty acid esters, ethers, alcohols, amines, amides, imides; compounds which form layers through tribochemical reactions, for example saturated fatty acids, phosphoric acid and thiophosphoric esters, xanthogenates, sulphurized fatty acids; compounds which form polymer-like layers, for example ethoxylated dicarboxylic acid partial esters, dialkyl phthalates, methacrylates, unsaturated fatty acids, sulphurized olefins and organometallic compounds, for example molybdenum compounds (molybdenum dithiophosphates and molybdenum dithiocarbamates MoDTC) and their combinations with ZnDTPs, copper-containing organic compounds.

Some of the compounds listed above may fulfil multiple functions. ZnDTP, for example, is primarily an antiwear additive and an extreme pressure additive, but also has the characteristics of an antioxidant and corrosion inhibitor (here: metal passivator/deactivator).

The above-detailed additives are described in detail, inter alia, in T. Mang, W. Dresel (eds.): "Lubricants and Lubrication", Wiley-VCH, Weinheim 2001; R. M. Mortier, S. T. Orszulik (eds.): "Chemistry and Technology of Lubricants".

Preferably, the total concentration of the one or more additives is up to 20% by weight, more preferably 0.05% to 15% by weight, more preferably 5% to 15% by weight, based on the total weight of the composition.

Preferably, the amounts of the polymers according to the invention, the base oil or fuel and optionally one or more additives sum up from 95 to 100 % by weight, preferably sum up to 100% by weight based on the total weight of the composition.

### Use of the poly alkyl(meth)acrylate copolymer of the present invention or of the compositions thereof

The present invention also relates to the use of the above-mentioned sulfur-free poly alkyl(meth)acrylate copolymer or to the use of the composition comprising said sulfur-free copolymer for improving viscosity index and/or preventing copper corrosion of metals consisting of or containing copper.

The sulfur-free poly alkyl(meth)acrylate copolymers of the invention can be used an additive for fluids such as driveline (DL) fluids, which come into contact with metal parts in mechanical or electrical devices such as powertrains, transmissions, engines and electric motors and batteries in vehicles, e.g. automotives, trains or aircraft.

In addition to the excellent viscosity index-improving properties and shear-resistant properties, the poly alkyl(meth)acrylate copolymers of the present invention prevent effectively copper corrosion of metal parts consisting of or containing copper, thus can be used suitably as additives, preferably as a viscosity index improver (VII) having a copper corrosion inhibition effect.

### Method for inhibiting or reducing copper corrosion using the composition according to the invention

In a further aspect, the invention also relates to a method for inhibiting or reducing copper corrosion of at least one metal part consisting of or containing copper, wherein the sulfur-free poly alkyl(meth)acrylate copolymer according to the invention or the composition as defined in detail herein above is added, as an additive, to a fluid which comes into contact with said metals.

Preferably, the metal part is a part of a powertrain of a vehicle, more preferably an engine, electric motor, battery, transmission, shaft or gear.

The copper corrosion is measured according to ASTM D130, Copper Corrosion Test as described in detail below in the experimental part.

The composition of the present invention is free or substantially free of sulfur (less than 50 ppm sulfur content) and thus causes no or very little copper corrosion when used as fluids that come direct contact with metal parts of mechanical or electric devices.

Accordingly, the composition comprising at least one or more base oil (A) and one or more poly alkyl(meth)acrylate (B) of the present invention as a viscosity index improver or pour-point depressant not only achieves an excellent viscosity index improving effect and shear-stability improving effect, but also prevent corrosion of metals, preferably metals consisting of or containing copper, and thus can suitably be used for lubricating and cooling transmissions, engines, batteries, powertrains, gears or the like in mechanical or electrical devices.

The copolymers of the present invention, additive compositions thereof and the compositions such as lubricants, dielectric fluids, coolants or fuels comprising the polymers according to the invention are favorably used for driving system lubricating oils (such as manual transmission fluids, differential gear oils, automatic transmission fluids and belt-continuously variable transmission fluids, axle fluid formulations, dual clutch transmission fluids, and dedicated hybrid transmission fluids), for cooling and lubricating E-drives for electrical vehicles and hybrid vehicles, in coolants and fuels or in industrial oil formulations (such as for gear oils).

### EXPERIMENTAL PART

The present invention is further illustrated in detail hereinafter with reference to examples and comparative examples, without any intention to limit the scope of the present invention.

### Abbreviations

- CTA: Chain Transfer Agent
- init.: initiator
- BO: base oil
- MA-1: macroalcohol of hydrogenated polybutadiene (Mₙ = 2,000 g/mol)
- MA-2: macroalcohol of hydrogenated polybutadiene (Mₙ = 4,750 g/mol)
- MM-1: macromonomer of hydrogenated polybutadiene with methacrylate functionality (Mₙ = 2,000 g/mol)
- MM-2: macromonomer of hydrogenated polybutadiene with methacrylate functionality (Mₙ = 4,750 g/mol)
- MMA: methyl methacrylate
- St: styrene
- BMA: butyl methacrylate
- LMA: lauryl methacrylate, 73% C₁₂, 27% C₁₄, all linear
- SMA: stearyl methacrylate, 34% C₁₆, 66% C₁₈, all linear
- DMAEMA: 2-(dimethylamino)ethyl methacrylate
- DMAPMAM: N-(3-dimethylaminopropyl)methacrylamide
- DDM: n-dodecylmercaptan
- tBPO: tert-butyl 2-ethylperoxyhexanoate
- BTPB: 2,2-bis(t-butyl peroxy)butane
- Mₙ: number-average molecular weight
- M_{w}: weight-average molecular weight
- NB3020: Nexbase ^{®}3020, Group II base oil from Neste with a KV100 of 2.2 mm²/s
- NB3043: Nexbase ^{®}3043, Group III base oil from Neste with a KV100 of 4.3 mm²/s
- Yubase 2: Group II base oil from SK with a KV100 of 2.576 mm²/s
- Yubase 3: Group II base oil from SK with a KV100 of 3.12 mm²/s
- Yubase 4: Group III base oil from SK with a KV100 of 4.244 mm²/s
- Berylane 230SPP: Group II/III base oil from TOTAL with a KV100 of 1.01 mm²/s
- DOS: DUB Green DOS, bis(2-ethylhexyl) sebacate
- PDI: polydispersity index, molecular weight distribution calculated via M_{w}/Mₙ
- VI: viscosity index, measured according to ASTM D2270

### Methods:

The kinematic viscosity is measured according to ASTM D7042. Preferably, the kinematic viscosity is measured at a temperature of 100 °C (KV100) and 40 °C (KV40).

The shear-resistance is preferably evaluated by measuring the lubricant's properties before and after subjecting the lubricant to shearing according to JASO M347. Shearing is measured using an ultrasonic shear stability tester according to JASO M347 - 4.5.1 (one-hour method).

### Synthesis of hydroxylated hydrogenated polybutadienes MA-1 and MA-2

The hydroxylated hydrogenated polybutadiene was synthesized by anionic polymerization of 1,3-butadiene with butyllithium at 20-45 °C. On attainment of the desired degree of polymerization, the reaction was stopped by adding propylene oxide, and lithium was removed by precipitation with methanol. Subsequently, the polymer was hydrogenated under a hydrogen atmosphere in the presence of a noble metal catalyst at a temperature up to 140 °C and 200 bar pressure. After the hydrogenation had ended, the noble metal catalyst was removed, and organic solvent was drawn off under reduced pressure.

MA-1 thus obtained was diluted with a base oil, NB3020, to a polymer content of 97% by weight. MA-2 thus obtained was diluted with a base oil, NB3020, to a polymer content of 70% by weight. Table 2 summarizes the characterization data of MA-1 and MA-2. The sulfur-content of NB 3020 is less than 2ppm measured by JIS K 2541-6.

**Table 2: Characterization of the macroalcohols**

| | Mn [g/mol] | Hydrogenation level [%] | OH functionality [%] |
|---|---|---|---|
| MA-1 | 2,000 | >99 | >98 |
| MA-2 | 4,750 | >99 | >98 |

### Synthesis of the polybutadiene-based macromonomers MM-1 and MM-2

In a 2 L stirred apparatus equipped with a saber stirrer, an air inlet tube, a thermocouple with controller, a heating mantle, a column having a random packing of 3 mm wire spirals, a vapor divider, a top thermometer, a reflux condenser and a substrate cooler, 1000 g of the above-described MA-1 and MA-2 were dissolved, respectively, in methyl methacrylate (MMA) by stirring at 60 °C. Added to the solution are 20 ppm of 2,2,6,6-tetramethylpiperidin-1-oxyl radical and 200 ppm of hydroquinone monomethyl ether. After heating to MMA refluxtemperature (bottom temperature about 110 °C) while passing air through for stabilization, about 20 mL of MMA were distilled off for azeotropic drying. After cooling to 95 °C, LiOCH₃ was added and the mixture was heated back to reflux. After the reaction time of about 1 hour, the top temperature had fallen to approximately 64 °C because of methanol formation. The methanol/MMA azeotrope formed, was distilled off constantly until a constant top temperature of about 100 °C was established again. At this temperature, the mixture was left to react for a further hour. For further workup, the bulk of MMA was drawn off under reduced pressure. Insoluble catalyst residues were removed by pressure filtration (Seitz T1000 depth filter).

Table 3 summarizes the types of the hydroxylated hydrogenated polybutadienes, and the amounts of MMA and LiOCH₃ used for the synthesis of macromonomers MM-1 and MM-2.

**Table 3:**

| Macromonomer | hydroxylated hydrogenated polybutadienes | amount MMA [g] | amount LiOCH3 [g] |
|---|---|---|---|
| MM-1 | MA-1 | 500 | 1.5 |
| MM-2 | MA-2 | 450 | 0.3 |

### Synthesis of the poly alkyl(meth)acrylate copolymers P1 to P4 of the present invention and comparative examples Comp. P1 to Comp. P3

In the following synthesis of the poly alkyl(meth)acrylate polymers, the raw materials and the initiator mix 1 to 3 shown in Table 4 were used, respectively.

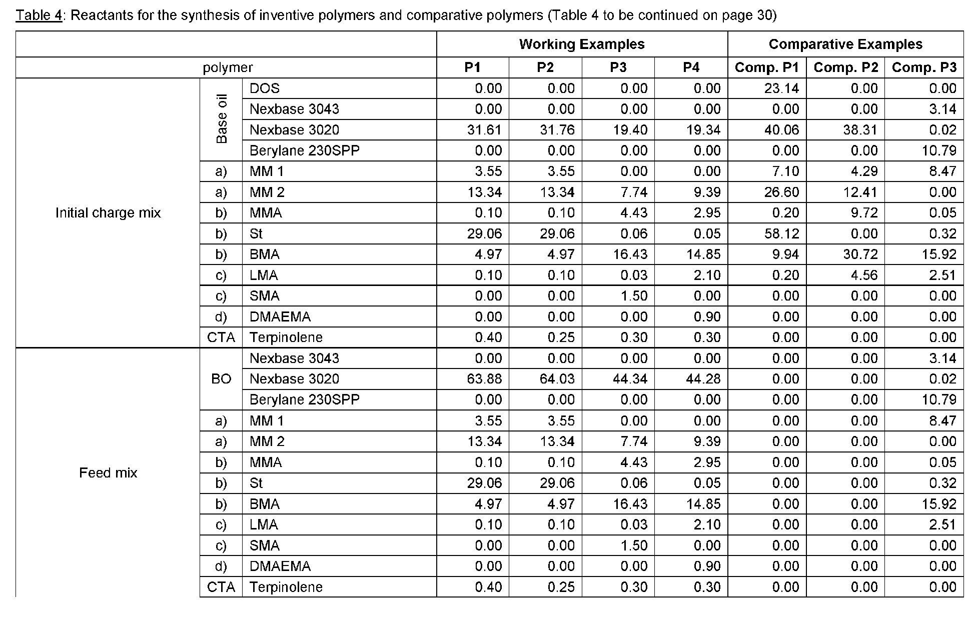

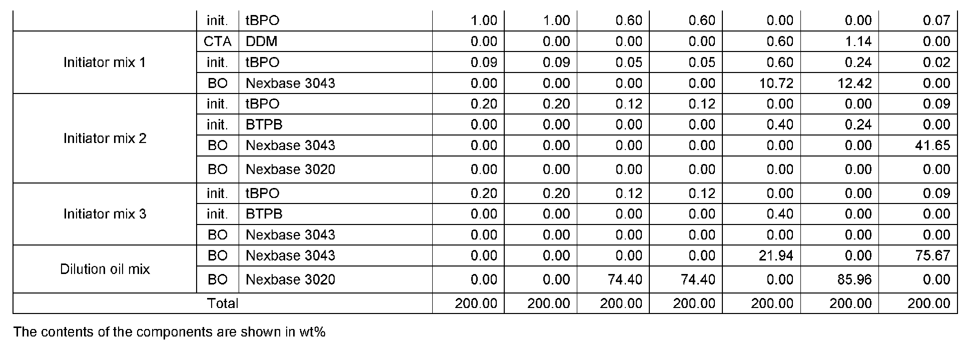

### Synthesis of poly alkyl(meth)acrylates P1 and P2:

A 4-neck glass round bottom flask equipped with a condenser, a stirrer and a thermocouple was initially charged with raw materials shown in Table 4. After heating to 90 °C under nitrogen, the Initiator mix 1 of Table 4 was added to the flask. Then, a feed mixture of the raw materials shown in Table 4 was added to the flask over 180 minutes. After keeping 90 °C for 60 minutes, the Initiator mix 2 of Table 4 was added to the flask. After keeping 90 °C for 120 minutes, the Initiator mix 3 of Table 4 was added to the flask. After keeping 90 °C for 120 minutes, the final poly alkyl(meth)acrylates P2 and P3 were obtained.

### Synthesis of poly alkyl(meth)acrylates P3 and P4

A 4-neck glass glass round bottom flask equipped with a condenser, stirrer and thermocouple was initially charged with raw materials shown in Table 3. After heating to 90 °C under nitrogen, the Initiator mix 1 of Table 4 was added to the flask. Then, a feed mixture of the raw materials shown in Table 4 was added to the flask over 180 minutes. After keeping 90 °C for 60 minutes, the Initiator mix 2 of Table 4 was added to the flask. After keeping 90 °C for 120 minutes, the Initiator mix 3 of Table 4 was added to the flask. After keeping 90 °C for 120 minutes, the Dilution oil mix of Table 4 was added to the flask. After keeping 90°C for 30 minutes, the final poly alkyl(meth)acrylates P4 and P5 were obtained.

### Synthesis of poly alkyl(meth)acrylate Comp. P1

A 4-neck glass round bottom flask equipped with a condenser, a stirrer and a thermocouple was initially charged with raw materials shown in Table 3. After heating to 115 °C under nitrogen for 30 minutes, 15% by weight of the total amount of the Initiator mix 1 of Table 4 was added to the flask over 60 minutes. Then, 25% by weight of the total amount of Initiator mix 1 was added to the flask over 60 minutes. After that, the remaining Initiator mix 1 was added to the flask over 60 minutes. After keeping 115 °C for 30 minutes, the Initiator mix 2 of Table 4 was added to the flask. After keeping 115 °C for 180 minutes, the Initiator mix 3 of Table 4 was added to the flask. After keeping 115 °C for 180 minutes, the Dilution oil mix of Table 4 was added to the flask. After keeping 115°C for 30 minutes, the final poly alkyl(meth)acrylate Comp. P1 was obtained.

### Synthesis of poly alkyl(meth)acrylate Comp. P2

A 4-neck glass round bottom flask equipped with a condenser, a stirrer and a thermocouple was initially charged with raw materials shown in Table 4. After heating to 115 °C under nitrogen for 30 minutes, 33% by weight of the total amount of Initiator mix 1 was added to the flask over 60 minutes. Then, 33% by weight of the total amount of Initiator mix 1 was added to the flask over 60 minutes. After that, the remaining Initiator mix 1 was added to the flask over 60 minutes. After keeping 115 °C for 120 minutes, the Initiator mix 2 of Table 4 was added to the flask. After keeping 115 °C for 120 minutes, the Dilution oil mix of Table 4 was added to the flask. After keeping 115°C for 30 minutes, the final poly alkyl(meth)acrylate Comp. P2 was obtained.

### Synthesis of poly alkyl(meth)acrylate Comp. P3

A 4-neck glass round bottom flask equipped with a condenser, a stirrer and a thermocouple was initially charged with raw materials shown in Table 4. After heating to 90 °C under nitrogen, the Initiator mix 1 of Table 4 was added to the flask. Then, the raw material shown in Table 4 was added to the flask over 180 minutes. After keeping 90 °C for 60 minutes, the Initiator mix 2 of Table 4 was added to the flask over 180 minutes. After keeping 90 °C for 120 minutes, the Initiator mix 3 of Table 4 is added to the flask. After keeping 90 °C for 120 minutes, the Dilution oil mix of Table 3 was added to the flask. After keeping 90°C for 30 minutes, the final poly alkyl(meth)acrylate Comp. P3 was obtained.

Table 5 shows the monomer compositions used to prepare the poly alkyl(meth)acrylate copolymers P1 to P4, as well as comparative copolymers Comp. P1 to Comp. P3, and the properties of these copolymers. The amounts of the components are shown in wt.-% and add up to 100%. The amounts of initiator and chain transfer agent CTA are given relative to the total amount of the monomers.

**Table 5: Monomer compositions and properties of the polymers**

| polymer | | **P1** | **P2** | **P3** | **P4** | **Comp. P1** | **Comp. P2** | **Comp. P3** |
|---|---|---|---|---|---|---|---|---|
| a) | MM-1 | 6.92 | 6.93 | 0.00 | 0.00 | 6.91 | 6.82 | 31.07 |
| a) | MM-2 | 26.00 | 26.03 | 25.51 | 30.89 | 25.89 | 19.75 | 0.00 |
| b) | MMA | 0.19 | 0.20 | 14.60 | 9.70 | 0.19 | 15.47 | 0.18 |
| b) | St | 56.63 | 56.71 | 0.20 | 0.17 | 56.56 | 0.00 | 1.16 |
| b) | BMA | 9.68 | 9.69 | 54.17 | 48.88 | 9.67 | 48.89 | 58.39 |
| c) | LMA | 0.19 | 0.20 | 0.10 | 6.91 | 0.19 | 7.26 | 9.21 |
| c) | SMA | 0.00 | 0.00 | 4.93 | 0.00 | 0.00 | 0.00 | 0.00 |
| d) | DMAEMA | 0.00 | 0.00 | 0.00 | 2.95 | 0.00 | 0.00 | 0.00 |
| CTA | DDM | 0.00 | 0.00 | 0.00 | 0.00 | 0.58 | 1.81 | 0.00 |
| CTA | Terpinolene | 0.39 | 0.24 | 0.49 | 0.49 | 0.00 | 0.00 | 0.00 |
| Sum (monomer+CTA) | | 100 | 100 | 100 | 100 | 100 | 100 | 100 |
| Mₙ | | 23475 | 28453 | 17640 | 18242 | 24530 | 17175 | 89165 |
| M_{w} | | 63851 | 74730 | 51985 | 62137 | 78968 | 79692 | 392522 |
| PDI | | 2.72 | 2.63 | 2.95 | 3.41 | 3.22 | 4.64 | 4.4 |
| Solid, wt% | | 49.9 | 49.8 | 30.1 | 30.1 | 49.6 | 30.0 | 24.7 |

| | | | | | | | | |
|---|---|---|---|---|---|---|---|---|
| The contents of the components are shown in wt% / (monomers + CTA) * Solid is (monomers + CTAs)/(All components)*100 | | | | | | | | |

### Copper Strip Test: details of the experiments according to ASTM D130

The polymers P1 to P4 and Comp. P1 to Comp. P3 were dissolved respectively in base oils in order to conduct the copper strip test at 165.5°C for 72 hours in accordance with ASTM D130.

The base oils used in the examples and their sulfur contents measured in accordance with JIS K 2541-6 are given in Table 6 below.

**Table 6:**

| **Base oil** | **Base oil** |
|---|---|
| Berylane 230SPP | <2ppm |
| Yubase 2 | <2ppm |
| Yubase 3 | <2ppm |
| Yubase 4 | <2ppm |

### Copper Strip Test

A polished copper strip is immersed in 35 mL of the inventive or comparative sample oil in a beaker glass with an air permeable plug and heated under predetermined temperature conditions for the predetermined length of time. At the end of the heating period, the copper strip is removed, washed with petroleum ether and the color and tarnish level were assessed against the ASTM Copper Strip Corrosion Standard. The classification according to ASTM D130 for the evaluation of the corrosion is defined in Table 7.

**Table 7: Copper Strip Classifications according to ASTM D130**

| **Classification** | **Designation** | **Description^{A}** |
|---|---|---|
| 1a | Slight tarnish | Light orange, almost the same as a freshly polished strip |
| 1b | Slight tarnish | Dark orange |
| 2a | Moderate tarnish | Claret red |
| 2b | Moderate tarnish | Lavender |
| 2c | Moderate tarnish | Multicolored with lavender blue or silver, or both, overlaid on claret red |
| 2d | Moderate tarnish | Silvery |
| 2e | Moderate tarnish | Brassy or gold |
| 3a | Dark tarnish | Magenta overcast on brassy strip |
| 3b | Dark tarnish | Multicolored with red and green showing (peacock green), but no gray |
| 4a | Corrosion | Transparent black, dark gray or brown with peacock green barely showing |
| 4b | Corrosion | Graphite or lusterless black |
| 4c | Corrosion | Glossy or yet black |

The ASTM D130 Copper Strip Corrosion Standard is a colored reproduction of strips characteristic of the description.

The types of the base oils and their amounts, the types of the copolymers and their amounts, as well as the properties of the compositions comprising the base oil and the copolymers are summarized in Table 8 below (all amounts are in wt%).

**Table 8: Formulations comprising the polymers of the invention and comparative polymers**

| | **Working examples** | | | | **Comparative examples** | | |
|---|---|---|---|---|---|---|---|
| | **Fluid 1** | **Fluid 2** | **Fluid 3** | **Fluid 4** | **Fluid 5** | **Fluid 6** | **Fluid 7** |
| P1 | 6.7 | - | - | - | - | - | - |
| P2 | - | 6.7 | - | - | - | - | - |
| P3 | - | - | 11.51 | - | - | - | - |
| P4 | - | - | - | 11.4 | - | - | - |
| Comp. P1 | - | - | - | - | 6.7 | - | - |
| Comp. P2 | - | - | - | - | - | 11.45 | - |
| Comp. P3 | - | - | - | - | - | - | 10.1 |
| Yubase 3 | 10 | 13.3 | - | - | 18.7 | - | - |
| Yubase 4 | 83.3 | 80 | 88.49 | 88.6 | 74.6 | 88.55 | 89.9 |
| Total | 100 | 100 | 100 | 100 | 100 | 100 | 100 |
| Solid in fluid=ca.3.4% | 3.3 | 3.3 | 3.5 | 3.4 | 3.3 | 3.4 | 2.5 |
| KV100 | 5.011 | 5.000 | 4.904 | 5.011 | 4.956 | 4.929 | 4.886 |
| VI | 174 | 175 | 165 | 169 | 174 | 165 | 432 |
| Sheared KV100(JASO) | 4.970 | 4.946 | 4.871 | 4.949 | 4.912 | 4.910 | 3.307 |
| Viscosity loss (%) | 0.8 | 1.1 | 0.7 | 1.2 | 0.9 | 0.4 | 32.3 |
| Cu strip test | 1a | 1a | 1a | 1a | 2c | 3a | - |

| | | | | | | | |
|---|---|---|---|---|---|---|---|
| "-" means not used/comprised/carried out. The amounts in the table are shown in wt.-% | | | | | | | |

From Table 8, it is evident that Fluids 1 to 4 comprising respectively the poly alkyl(meth)acrylates P1 to P4 of the present invention do not cause any substantial copper corrosion and the copper strips are almost the same as freshly polished strip (classification 1a or 1b) after the test. In addition, Fluids 1 to 4 show excellent shear stability, as shown by their low values in the viscosity loss in the table.

On the other hand, Fluids 5 and 6 comprising respectively the poly alkyl(meth)acrylates Comp. P1 and Comp. P2 which were prepared in the presence of a sulfur-containing CTA, n-dodecylmercaptan, caused moderate tarnish of the copper strips although the viscosity loss is low.

Fluid 7 comprising the poly alkyl(meth)acrylate Comp. P3 shows a significant viscosity loss of approx. 30 % indicating that the shear stability is very poor. Therefore, Fluid 7 is not useful for the purpose of the present invention and thus the Copper Strip Test was not carried out.

In summary, the sulfur-free poly alkyl(meth)acrylate copolymers according to the present invention cause far less copper corrosion compared to the comparative copolymers while the excellent and well-balanced VI improving effect and shear-stability improving effect are maintained.

## Claims

1. A sulfur-free poly alkyl(meth)acrylate copolymer having a sulfur content of less than 50 ppm and a weight average molecular weight (M_{w}) of 10,000 to 200,000 g/mol and obtainable by radical polymerization of a monomer composition comprising:
(a) 10 to 50 wt.-% of a polybutadiene-based macromonomer having a number average molecular weight of 500 to 10,000 g/mol, or a mixture thereof;
(b) 10 to 90 wt.-% of a monomer selected from linear or branched C₁-C₆ alkyl(meth)acrylates, styrene, substituted styrene having an alkyl substituent in the side chain and having from 8 to 17 carbon atoms, or a mixture thereof; and
(c) 0 to 30 wt.-% of a monomer selected from linear or branched C₇-C₃₀ alkyl(meth)acrylates, or a mixture thereof;
respectively based on the total weight of the monomer composition, and.
wherein the radical polymerization of the monomer composition is carried out in the presence of a sulfur-free chain transfer agent selected from:
(i) terpenoids;
(ii) oligomers of methacrylate or methacrylic acid having a weight average molecular weight (M_{w}) of less than 15,000 g/mol;
(iii) styrene oligomers having a weight average molecular weight (M_{w}) of less than 1,000 g/mol;
(iv) Co(ll) complexes;
(v) addition-fragmentation chain transfer agents represented by a chemical formula (I), 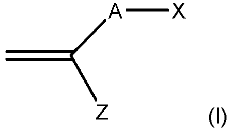 wherein A is -O- or -CH₂-, X is C₁-C₄ alkyl, peroxy C₁-C₆ alkyl, peroxy C₆-C₁₀ aralkyl, -CH₂Ph, or -COOR¹ with R¹ being C₁-C₄ alkyl, and Z is Ph, -CN, -OR¹ with R¹ being C₁-C₄ alkyl, COOR¹ with R¹ being C₁-C₄ alkyl, or-CONH₂;
(vi) quinones;
(vii) ethylenically unsaturated hydrocarbons having 4-14 carbon atoms;
(viii) isopropanol;
or a mixture thereof.

2. The sulfur-free poly alkyl(meth)acrylate copolymer according to claim 1, wherein the monomer composition further comprises a monomer (d) selected from the group consisting of (meth)acrylate of ether alcohol, aminoalkyl (meth)acrylate, aminoalkyl (meth)acrylamide or a mixture thereof, based on the total weight of the monomer composition.

3. The sulfur-free poly alkyl(meth)acrylate copolymer according to claim 2, wherein the total amount of the monomers (a), (b), (c), and (d) in the monomer composition is chosen to sum up to at least 80 wt.-%, based on the total weight of the monomer composition.

4. The sulfur-free poly alkyl(meth)acrylate according to any one of the previous claims, wherein the sulfur-free chain transfer agent is selected from
(i) a terpenoid (i) selected from a group consisting of limonene, myrcene, α-terpinene, β-terpinene, γ-terpinene, terpinolene, α-pinene, β-pinene, dipentene, or a mixture thereof;
(ii) an oligomer (ii) obtainable by polymerizing at least one monomer selected from a group consisting of C₁-C₃₆ alkyl methacrylate, dispersing oxygen- and/or nitrogen-functionalized methacrylate, heterocyclic methacrylate, aromatic methacrylate, and methacrylic acid or a mixture thereof;
(iii) a styrene oligomer selected from a group consisting of α-methyl styrene dimer, and styrene dimer;
(iv) a Co(ll) complexe comprising a Co(ll) and at least one ligand according to formulae (II) to (VII) 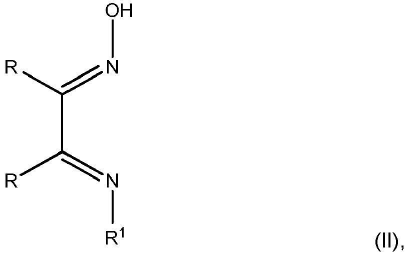 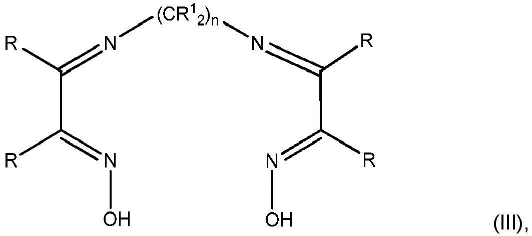 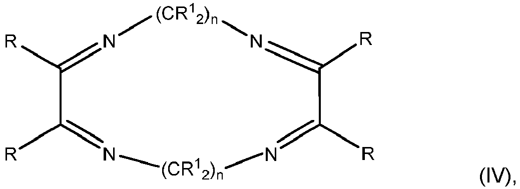 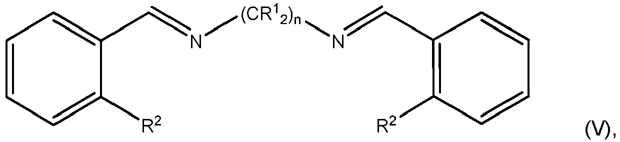 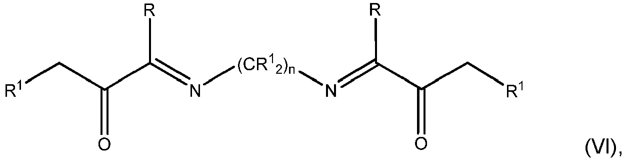 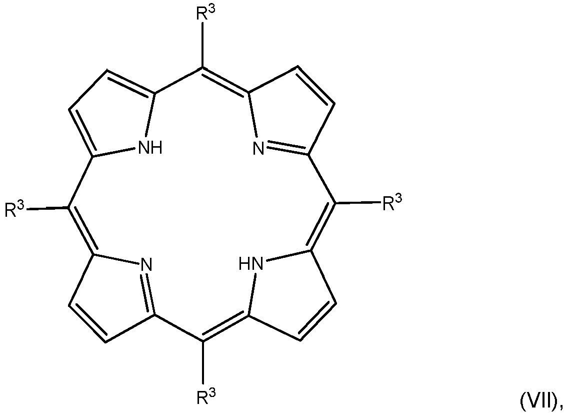 wherein each R independently represents Ph or C₁-C₁₂ alkyl, or two R on adjacent carbon atoms together represent C₅-C₈ alkylene; each R¹ is independently H, -OH or C₁-C₁₂ alkyl; each R² is independently -OH or -NH; each R³ is independently H, Ph, C₁-C₁₂ alkyl, hydroxyphenyl, or C₁-C₄ alkoxyphenyl; and each n is independently an integer 2 or 3;
(v) an addition-fragmentation chain transfer agents represented by formula (I) selected from a group consisting of α-benzyloxystyrene, α-benzyloxyacrylonitrile, methyl α-benzyloxyacrylate, α-benzyoloxyacrylamide, ketene diethyl acetal, methyl α-benzyloxyvinyl ether, α-isopropoxystyrene or a mixture thereof;
(vi) a quinone (vi) selected from a group consisting of 1,4-naphtoquinone, 2-methyl-1,4-napotoquinone, and 2-hydroxy-1,4-naphtoquinone;
(vii) an ethylenically unsaturated hydrocarbons (vii) selected from a group consisting of 1,4-cyclohexadiene, 2-methyl-1,4-cyclohexadiene, 1,2-dihydronaphthalene, 9,10-dihydrophenanthrene, octahydrophenantrene, 9,10-dihydroantracene, octahydroanthracene, tetralin, indene, 1-butene, 1-hexene, -octene, 1-decene, 1-dodecene;
(viii) isopropanol;
or a mixture thereof.

5. The sulfur-free poly alkyl(meth)acrylate according to any one of the previous claims, wherein the amount of the sulfur-free chain transfer agent for the radical polymerization is 0.1 to 20 wt.-%, more preferably 0.1 to 10 wt.-%, even more preferably 0.2 to 5 wt.-% based on the total weight of the monomer composition.

6. A composition comprising:
(A) a base oil having a sulfur content of less than 50 ppm; and
(B) the sulfur-free poly alkyl(meth)acrylate copolymer according to any one of claims 1 to 5.

7. The composition according to claim 6 further comprising a sulfur-free pour-point depressant.

8. The composition according to claim 6 or 7, wherein the content of the sulfur-free poly alkyl(meth)acrylate copolymer is 20 to 99.5 wt.-%, based on the total weight of the composition.

9. The composition according to claim 6 or 7, wherein the content of the sulfur-free poly alkyl(meth)acrylate copolymer is 0.1 to 30 wt.-% based on the total weight of the composition.

10. Use of the sulfur-free poly alkyl(meth)acrylate copolymer according to any one of claims 1 to 4 or the composition according to any one of claims 6 to 8 for improving viscosity index and preventing copper corrosion of metals consisting of or containing copper.

11. A method for preventing copper corrosion of metals consisting of or containing copper, wherein the sulfur-free poly alkyl(meth)acrylate copolymer according to any one of claims 1 to 4 or the composition according to any one of claims 6 to 9 is added, as an additive, to a fluid which comes into contact with said metals.

12. The method according to claim 11, wherein the metal is a part of a powertrain of a vehicle, more preferably an engine, electric motor, battery, transmission, shaft or gear.

## Patentansprüche

1. Schwefelfreies Polyalkyl(meth)acrylat-Copolymer mit einem Schwefelgehalt von weniger als 50 ppm und einem gewichtsgemittelten Molekulargewicht (M_{w}) von 10.000 bis 200.000 g/mol, erhältlich durch radikalische Polymerisation einer Monomerzusammensetzuung umfassend:
(a) 10 bis 50 Gew.-% an einem Makromonomer auf Polybutadienbasis mit einem anzahlgemittelten Molekulargewicht von 500 bis 10.000 g/mol, oder ein Gemisch davon;
(b) 10 bis 90 Gew.-% an einem Monomer ausgewählt aus linearen oder verzweigten C₁-C₆-Alkyl(meth)acrylaten, Styrol, substituiertem Styrol mit einem Alkylsubstituenten in der Seitenkette und mit 8 bis 17 Kohlenstoffatomen, oder ein Gemisch davon; und
(c) 0 bis 30 Gew.-% an einem Monomer ausgewählt aus linearen und verzweigten C₇-C₃₀-Alkyl (meth) acrylaten, oder ein Gemisch davon;
jeweils bezogen auf das Gesamtgewicht der Monomerzusammensetzung, und
wobei die radikalische Polymerisation der Monomerzusammensetzung in Gegenwart eines schwefelfreien Kettenübertragungsmittels durchgeführt wird, ausgewählt aus:
(i) Terpenoiden;
(ii) Oligomeren von Methacrylat oder Methacrylsäure mit einem gewichtsgemittelten Molekulargewicht (M_{w}) von weniger als 15.000 g/mol;
(iii) Styrololigomeren mit einem gewichtsgemittelten Molekulargewicht (M_{w}) von weniger als 1.000 g/mol;
(iv) Co(II)-Komplexen;
(v) Addition-Fragmentierungs-Kettenübertragungsmitteln, dargestellt durch eine chemische Formel (I), 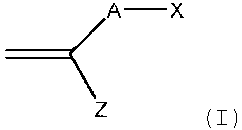 wobei A -O- oder -CH₂- ist, X C₁-C₄-Alkyl, Peroxy-C₁-C₆-alkyl, Peroxy-C₆-C₁₀-aralkyl, -CH₂Ph oder -COOR¹ ist, wobei R¹ C₁-C₄-Alkyl ist, Z Ph, -CN, -OR¹, wobei R¹ C₁-C₄-Alkyl ist, COOR¹, wobei R¹ C₁-C₄-Alkyl ist, oder -CONH₂ ist;
(vi) Chinonen;
(vii) ethylenisch ungesättigten Kohlenwasserstoffen mit 4-14 Kohlenstoffatomen;
(viii) Isopropanol;
oder einem Gemisch davon.

2. Schwefelfreies Polyalkyl(meth)acrylat-Copolymer gemäß Anspruch 1, wobei die Monomerzusammensetzung ferner ein Monomer (d) ausgewählt aus der Gruppe bestehend aus (Meth)acrylaten von Etheralkohol, Aminoalkyl(meth)acrylat, Aminoalkyl(meth)acrylamid oder ein Gemisch davon, bezogen auf das Gesamtgewicht der Monomerzusammensetzung, umfasst.

3. Schwefelfreies Polyalkyl(meth)acrylat-Copolymer gemäß Anspruch 2, wobei die Gesamtmenge der Monomere (a), (b), (c) und (d) in der Monomerzusammensetzung so ausgewählt ist, dass ihre Summe wenigstens 80 Gew.-%, bezogen auf das Gesamtgewicht der Monomerzusammensetzung, beträgt.

4. Schwefelfreies Polyalkyl(meth)acrylat-Copolymer gemäß einem der vorstehenden Ansprüche, wobei das schwefelfreie Kettenübertragungsmittel ausgewählt ist aus
(i) einem Terpenoid (i) ausgewählt aus einer Gruppe bestehend aus Limonen, Myrcen, α-Terpinen, β-Terpinen, γ-Terpinen, Terpinolen, α-Pinen, β-Pinen, Dipenten, oder einem Gemisch davon;
(ii) einem Oligomer (ii), erhältlich durch Polymerisation von wenigstens einem Monomer ausgewählt aus einer Gruppe bestehend aus C₁-C₃₆-Alkylmethacrylat, dispergierendem Sauerstoff- und/oder Stickstoff-funktionalisiertem Methacrylat, heterocyclischem Methacrylat, aromatischem Methacrylat und Methacrylsäure, oder einem Gemisch davon;
(iii) einem Styrololigomer ausgewählt aus einer Gruppe bestehend aus α-Methylstyrol-Dimer und Styrol-Dimer;
(iv) einem Co(II)-Komplex umfassend ein Co(II) und wenigstens einen Liganden gemäß Formeln (II) bis (VII) 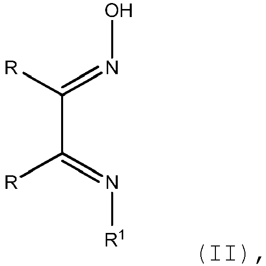 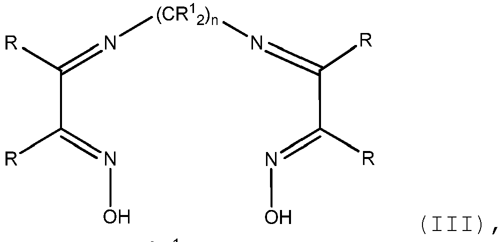 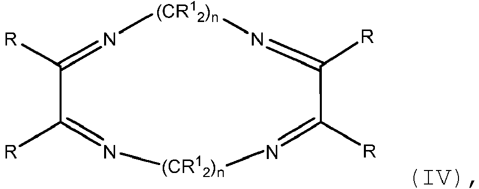 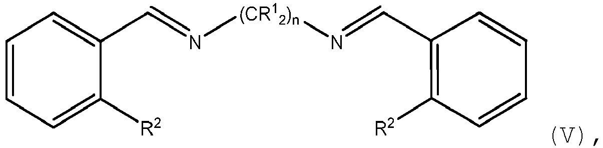 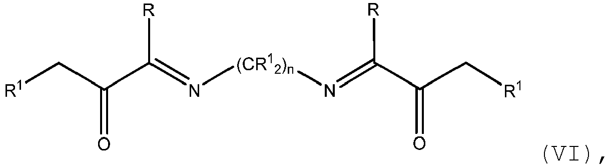 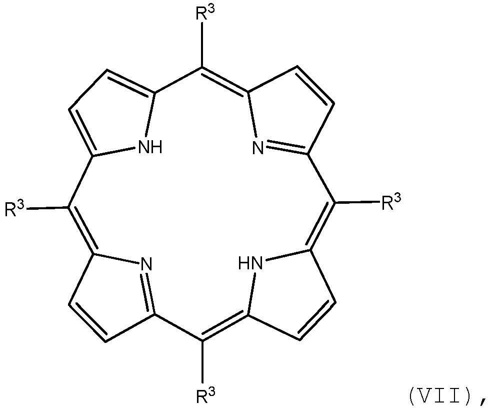 wobei jedes R unabhängig Ph oder C₁-C₁₂-Alkyl darstellt oder zwei R an benachbarten Kohlenstoffatomen zusammen C₅-C₈-Alkylen darstellen; jedes R¹ unabhängig H, -OH oder C₁-C₁₂-Alkyl ist; jedes R² unabhängig -OH oder -NH ist; jedes R³ unabhängig H, Ph, C₁-C₁₂-Alkyl, Hydroxyphenyl oder C₁-C₄-Alkoxyphenyl ist; und jedes n unabhängig eine ganze Zahl 2 oder 3 ist;
(v) einem Additions-Fragmentierungs-Kettenübertragungsmittel dargestellt durch Formel (I), ausgewählt aus einer Gruppe bestehend aus α-Benzyloxystyrol, α-Benzyloxyacrylnitril, Methyl-α-benzyloxyacrylat, α-Benzyloxyacrylamid, Ketendiethylacetal, Methyl-α-benzyloxyvinylether, α-Isopropoxystyrol oder einem Gemisch davon;
(vi) einem Chinon (vi) ausgewählt aus einer Gruppe bestehend aus 1,4-Naphtochinon, 2-Methyl-1,4-naphtochinon und 2-Hydroxy-1,4-naphtochinon;
(vii) einem ethylenisch ungesättigten Kohlenwasserstoff
(vii) ausgewählt aus einer Gruppe bestehend aus 1,4-Cyclohexadien, 2-Methyl-1,4-cyclohexadien, 1,2-Dihydronaphthalen, 9,10-Dihydrophenanthren, Octahydrophenantren, 9,10-Dihydroantracen, Octahydroanthracen, Tetralin, Inden, 1-Buten, 1-Hexen,-Octen, 1-Decen, 1-Dodecen;
(viii) Isopropanol;
oder einem Gemisch davon.

5. Schwefelfreies Polyalkyl(meth)acrylat gemäß einem der vorstehenden Ansprüche, wobei die Menge des schwefelfreien Kettenübertragungsmittels für die radikalische Polymerisation 0,1 bis 20 Gew.-%, bevorzugter 0,1 bis 10 Gew.-%, noch bevorzugter 0,2 bis 5 Gew.-%, bezogen auf das Gesamtgewicht der Monomerzusammensetzung, beträgt.

6. Zusammensetzung umfassend:
(A) ein Grundöl mit einem Schwefelgehalt von weniger als 50 ppm; und
(B) das schwefelfreie Polyalkyl(meth)acrylat-Copolymer gemäß einem der Ansprüche 1 bis 5.

7. Zusammensetzung gemäß Anspruch 6, ferner umfassend einen schwefelfreien Pourpoint-Senker.

8. Zusammensetzung gemäß Anspruch 6 oder 7, wobei der Gehalt an dem schwefelfreien Polyalkyl(meth)acrylat-Copolymer 20 bis 99,5 Gew.-%, bezogen auf das Gesamtgewicht der Zusammensetzung, beträgt.

9. Zusammensetzung gemäß Anspruch 6 oder 7, wobei der Gehalt an dem schwefelfreien Polyalkyl(meth)acrylat-Copolymer 0,1 bis 30 Gew.-%, bezogen auf das Gesamtgewicht der Zusammensetzung, beträgt.

10. Verwendung des schwefelfreien Polyalkyl(meth)acrylat-Copolymers gemäß einem der Ansprüche 1 bis 4 oder der Zusammensetzung gemäß einem der Ansprüche 6 bis 8 zum Verbessern des Viskositätsindex und Verhindern von Kupferkorrosion von Metallen, die aus Kupfer bestehen oder es enthalten.

11. Verfahren zum Verhindern von Kupferkorrosion von Metallen, die aus Kupfer bestehen oder es enthalten, wobei das schwefelfreie Polyalkyl(meth)acrylat-Copolymer gemäß einem der Ansprüche 1 bis 4 oder die Zusammensetzung gemäß einem der Ansprüche 6 bis 9 als Zusatzstoff zu einem Fluid, das mit den Metallen in Kontakt kommt, zugegeben wird.

12. Verfahren gemäß Anspruch 11, wobei das Metall ein Teil eines Antriebsstrangs eines Fahrzeugs ist, bevorzugter eines Motors, eines Elektromotors, einer Batterie, einer Kraftübertragungsvorrichtung, einer Welle oder eines Getriebes.

## Revendications

1. Copolymère de poly((méth)acrylate d'alkyle) exempt de soufre ayant une teneur en soufre inférieure à 50 ppm et un poids moléculaire moyen en poids (M_{w}) de 10 000 à 200 000 g/mole et pouvant être obtenu par polymérisation radicalaire d'une composition de monomères comprenant :
(a) 10 à 50 % en poids d'un macromonomère à base de polybutadiène ayant un poids moléculaire moyen en nombre de 500 à 10 000 g/mole, ou un mélange correspondant ;
(b) 10 à 90 % en poids d'un monomère choisi parmi des (méth)acrylates d'alkyle en Ci-Ce linéaires ou ramifiés, le styrène, un styrène substitué ayant un substituant alkyle dans la chaîne latérale et ayant de 8 à 17 atomes de carbone, ou un mélange correspondant ; et
(c) 0 à 30 % en poids d'un monomère choisi parmi des (méth)acrylates d'alkyle en C₇-C₃₀ linéaires ou ramifiés, ou un mélange correspondant ;
respectivement basés sur le poids total de la composition de monomères, et
la polymérisation radicalaire de la composition de monomères étant réalisée en la présence d'un agent de transfert de chaîne exempt de soufre choisi parmi :
(i) des terpénoïdes ;
(ii) des oligomères de méthacrylate ou d'acide méthacrylique ayant un poids moléculaire moyen en poids (M_{w}) inférieur à 15 000 g/mole ;
(iii) des oligomères de styrène ayant un poids moléculaire moyen en poids (M_{w}) inférieur à 1 000 g/mole ;
(iv) des complexes de Co(II) ;
(v) des agents de transfert de chaîne par addition-fragmentation représentés par une formule chimique (I), 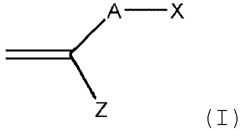 A étant -0- ou -CH₂-, X étant C₁-C₄ alkyle, peroxy Ci-Ce alkyle, peroxy C₆-C₁₀ aralkyle, -CH₂Ph ou -COOR¹, R¹ étant C₁-C₄ alkyle, et Z étant Ph, -CN, -OR¹, R¹ étant C₁-C₄ alkyle, COOR¹, R¹ étant C₁-C₄ alkyle ou -CONH₂ ;
(vi) des quinones ;
(vii) des hydrocarbures éthyléniquement insaturés ayant 4 à 14 atomes de carbone ;
(viii) de l'isopropanol ;
ou un mélange correspondant.

2. Copolymère de poly((méth)acrylate d'alkyle) exempt de soufre selon la revendication 1, la composition de monomères comprenant en outre un monomère (d) choisi dans le groupe constitué d'un (méth)acrylate d'alcool d'éther, d'un (méth)acrylate d'aminoalkyle, d'un aminoalkyl(méth)acrylamide ou d'un mélange correspondant, sur la base du poids total de la composition de monomères.

3. Copolymère de poly((méth)acrylate d'alkyle) exempt de soufre selon la revendication 2, la quantité totale des monomères (a), (b), (c) et (d) dans la composition de monomères étant choisie pour totaliser au moins 80 % en poids, sur la base du poids total de la composition de monomères.

4. Poly((méth)acrylate d'alkyle) exempt de soufre selon l'une quelconque des revendications précédentes, l'agent de transfert de chaîne exempt de soufre étant choisi parmi
(i) un terpénoïde (i) choisi dans un groupe constitué de limonène, myrcène, α-terpinène, β-terpinène, γ-terpinène, terpinolène, α-pinène, β-pinène, dipentène ou un mélange correspondant ;
(ii) un oligomère (ii) pouvant être obtenu par polymérisation d'au moins un monomère choisi dans un groupe constitué d'un méthacrylate d'alkyle en C₁-C₃₆, d'un méthacrylate fonctionnalisé par oxygène et/ou azote dispersant, d'un méthacrylate hétérocyclique, d'un méthacrylate aromatique et d'un acide méthacrylique ou un mélange correspondant ;
(iii) un oligomère de styrène choisi dans un groupe constitué d'un dimère de α-méthylstyrène et d'un dimère de styrène ;
(iv) un complexe de Co(II) comprenant un Co(II) et au moins un ligand selon les formules (II) à (VII) 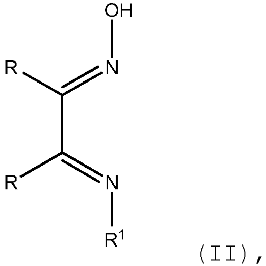 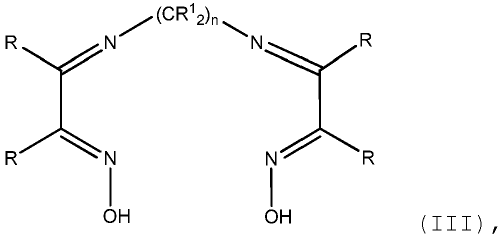 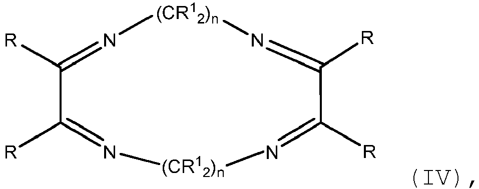 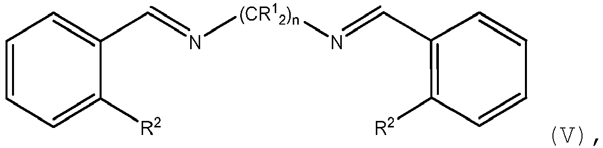 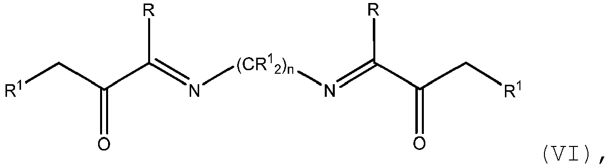 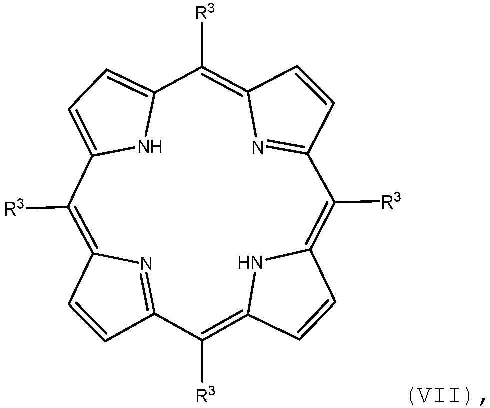 chaque R représentant indépendamment Ph ou C₁-C₁₂ alkyle, ou deux R sur des atomes de carbone adjacents représentant ensemble C₅-C₈ alkylène ; chaque R¹ étant indépendamment H, -OH ou C₁-C₁₂ alkyle ; chaque R² étant indépendamment -OH ou -NH ; chaque R³ étant indépendamment H, Ph, C₁-C₁₂ alkyle, hydroxyphényle, ou C₁-C₄ alcoxyphényle ; et chaque n étant indépendamment un entier 2 ou 3 ;
(v) des agents de transfert de chaîne par addition-fragmentation représentés par la formule (I) choisis dans un groupe constitué de α-benzyloxystyrène, α-benzyloxyacrylonitrile, α-benzyloxyacrylate de méthyle, α-benzyoloxyacrylamide, cétène diéthylacétal, éther de méthyle et de α-benzyloxyvinyle, α-isopropoxystyrène ou un mélange correspondant ;
(vi) une quinone (vi) choisie dans un groupe constitué de 1,4-naphtoquinone, 2-méthyl-1,4-naphtoquinone et 2-hydroxy-1,4-naphtoquinone ;
(vii) des hydrocarbures éthyléniquement insaturés (vii) choisis dans un groupe constitué de 1,4-cyclohexadiène, 2-méthyl-1,4-cyclohexadiène, 1,2-dihydronaphtalène, 9,10-dihydrophénanthrène, octahydrophénantrène, 9,10-dihydroantracène, octahydroanthracène, tétraline, indène, 1-butène, 1-hexène, -octène, 1-décène, 1-dodécène ;
(viii) de l'isopropanol ;
ou un mélange correspondant.

5. Poly((méth)acrylate d'alkyle) exempt de soufre selon l'une quelconque des revendications précédentes, la quantité de l'agent de transfert de chaîne exempt de soufre pour la polymérisation radicalaire étant de 0,1 à 20 % en poids, plus préférablement 0,1 à 10 % en poids, encore plus préférablement 0,2 à 5 % en poids sur la base du poids total de la composition de monomères.

6. Composition comprenant :
(A) une huile de base ayant une teneur en soufre inférieure à 50 ppm ; et
(B) le copolymère de poly((méth)acrylate d'alkyle) exempt de soufre selon l'une quelconque des revendications 1 à 5.

7. Composition selon la revendication 6 comprenant un agent d'abaissement du point d'écoulement exempt de soufre.

8. Composition selon la revendication 6 ou 7, la teneur du copolymère de poly((méth)acrylate d'alkyle) exempt de soufre étant de 20 à 99,5 % en poids, sur la base du poids total de la composition.

9. Composition selon la revendication 6 ou 7, la teneur du copolymère de poly((méth)acrylate d'alkyle) exempt de soufre étant de 0,1 à 30 % en poids, sur la base du poids total de la composition.

10. Utilisation du copolymère de poly((méth)acrylate d'alkyle) exempt de soufre selon l'une quelconque des revendications 1 à 4 ou la composition selon l'une quelconque des revendications 6 à 8 pour l'amélioration de l'indice de viscosité et la prévention de la corrosion du cuivre de métaux constitués de, ou contenant du cuivre.

11. Procédé pour la prévention de la corrosion du cuivre de métaux constitués de, ou contenant du cuivre, le copolymère de poly((méth)acrylate d'alkyle) exempt de soufre selon l'une quelconque des revendications 1 à 4 ou la composition selon l'une quelconque des revendications 6 à 9 étant ajouté(e), en tant qu'additif, à un fluide qui entre en contact avec lesdits métaux.

12. Procédé selon la revendication 11, le métal étant une partie d'un motopropulseur d'un véhicule, plus préférablement d'un moteur, d'un moteur électrique, d'une batterie, d'une transmission, d'un arbre ou d'un engrenage.
